(19) Europäisches Patentamt
European Patent Office
Office européen des brevets

(11) **EP 4 661 512 A1**

(12) **EUROPEAN PATENT APPLICATION**
published in accordance with Art. 153(4) EPC

(43) Date of publication:
**10.12.2025   Bulletin 2025/50**

(51) International Patent Classification (IPC):
**H04W 52/02** (2009.01)

(21) Application number: **24756039.4**

(52) Cooperative Patent Classification (CPC):
**H04W 52/02; H04W 68/00; H04W 76/28**

(22) Date of filing: **02.02.2024**

(86) International application number:
**PCT/CN2024/075595**

(87) International publication number:
**WO 2024/169665 (22.08.2024 Gazette 2024/34)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **17.02.2023   CN 202310165197**

(71) Applicant: **Huawei Technologies Co., Ltd.
Shenzhen, Guangdong 518129 (CN)**

(72) Inventors:
• **HAN, Jing
Shenzhen, Guangdong 518129 (CN)**
• **LI, Chenwan
Shenzhen, Guangdong 518129 (CN)**
• **XIANG, Hongyu
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **MEASUREMENT METHOD AND RELATED APPARATUS**

(57)    A measurement method and a related apparatus are disclosed. The method is applicable to a terminal device. The method includes: receiving a reference signal; and in an inactive state, performing radio resource management RRM measurement within a first paging time window PTW of an idle-state extended discontinuous reception eDRX cycle and/or a second PTW of an inactive-state eDRX cycle based on the reference signal, where the inactive-state eDRX cycle is greater than 10.24s. Embodiments of this application facilitate energy saving for the terminal device.

FIG. 6

Processed by Luminess, 75001 PARIS (FR)

## Description

This application claims priority to Chinese Patent Application No. 202310165197.3, filed with the China National Intellectual Property Administration on February 17, 2023 and entitled "MEASUREMENT METHOD AND RELATED APPARATUS", which is incorporated herein by reference in its entirety.

## TECHNICAL FIELD

This application relates to the field of communication technologies, and in particular, to a measurement method and a related apparatus.

## BACKGROUND

In a system, for example, a new radio (new radio, NR) system, to reduce power consumption of a terminal device, a terminal device in a radio resource control (radio resource control, RRC) idle (idle) state or an RRC inactive (inactive) state may periodically wake up in a discontinuous reception (discontinuous reception, DRX) mode to monitor a paging (paging) message. A cycle of periodic wake-up may be referred to as a DRX cycle, and a position of wake-up is referred to as a paging occasion (paging occasion, PO). In addition to DRX, the terminal device may alternatively periodically wake up by using an extended discontinuous reception (extended discontinuous reception, eDRX) mechanism to monitor a PO. A cycle of periodic wake-up may be referred to as an eDRX cycle. The eDRX cycle is usually longer than the DRX cycle. Therefore, in the eDRX mechanism, sleep duration of the terminal device can be increased, to reduce a quantity of times of periodic wake-up, and further reduce power consumption of the terminal device.

In release 17 (Release 17, R17), when an idle-state eDRX cycle is greater than 10.24s, a concept of paging time window (paging Time window, PTW) is introduced. However, in R17, only a case in which an inactive eDRX cycle is not greater than 10.24s is discussed in an inactive eDRX configuration. To be specific, no PTW is introduced in inactive eDRX in R17. If a PTW is also introduced in the inactive eDRX when the inactive eDRX cycle is greater than 10.24s, how a terminal device in an inactive state performs RRM measurement within two PTWs is a problem to be urgently resolved.

## SUMMARY

This application provides a measurement method and a related apparatus, to facilitate energy saving for a terminal device.

According to a first aspect, this application provides a measurement method. The method is performed by a terminal device. In the method, the terminal device receives a reference signal. In an inactive state, the terminal device performs radio resource management RRM measurement within a first paging time window PTW of an idle-state extended discontinuous reception eDRX cycle and/or a second PTW of an inactive-state eDRX cycle based on the reference signal, where the inactive-state eDRX cycle is greater than 10.24s.

In this application, measurement behavior of UE in an inactive state within two PTWs is defined. To be specific, the UE in the inactive state may perform RRM measurement within a first PTW of an idle-state eDRX cycle and/or a second PTW of an inactive-state eDRX cycle. This manner of performing measurement within a specified PTW facilitates energy saving for the terminal device.

In a possible implementation, the RRM measurement is performed based on a first parameter set, and the first parameter set includes a length of the idle-state eDRX cycle, a length of the inactive-state eDRX cycle, and a first paging DRX cycle.

In this implementation, the UE in the inactive state may perform RRM measurement within the first PTW of the idle-state eDRX cycle and the second PTW of the inactive-state eDRX cycle.

In a possible implementation, the first parameter set further includes at least one of the following information: a length of the first PTW and a length of the second PTW.

In a possible implementation, the RRM measurement is performed based on a second parameter set, and the second parameter set includes a length of a first eDRX cycle and a second paging DRX cycle.

In this implementation, the UE in the inactive state may perform RRM measurement within a PTW corresponding to the first eDRX cycle (for example, within the first PTW of the idle-state eDRX cycle or the second PTW of the inactive-state eDRX cycle).

In a possible implementation, the second parameter set further includes the following information: a length of a PTW corresponding to the first eDRX cycle.

In a possible implementation, the first eDRX cycle is a larger one between the idle-state eDRX cycle and the inactive-state eDRX cycle, or the first eDRX cycle is a smaller one between the idle-state eDRX cycle and the inactive-state eDRX cycle, or the first eDRX cycle is the inactive-state eDRX cycle.

In this implementation, the first eDRX cycle may be a larger one or a smaller one between the idle-state eDRX cycle and the inactive-state eDRX cycle, so that applicability is high.

In a possible implementation, when RRM measurement is performed on a serving cell,

that the RRM measurement is performed based on the first parameter set includes:

The RRM measurement is performed based on a quantity R1 of paging DRX cycles, where the quantity R1 of paging DRX cycles is determined based on the first parameter set, and within the first PTW and the second PTW, every R1 paging DRX cycles correspond to one RRM measurement result.

In this implementation, when the UE in the inactive state performs RRM measurement on a serving cell within the first PTW of the idle-state eDRX cycle and the second PTW of the inactive-state eDRX cycle, a measurement cycle may be the quantity R1 of paging DRX cycles.

In a possible implementation, when RRM measurement is performed on a serving cell,

that the RRM measurement is performed based on the second parameter set includes:

The RRM measurement is performed based on a quantity R2 of paging DRX cycles, where the quantity R2 of paging DRX cycles is determined based on the second parameter set, and within the PTW corresponding to the first eDRX cycle, every R2 paging DRX cycles correspond to one RRM measurement result.

In this implementation, when the UE in the inactive state performs RRM measurement on a serving cell within the first PTW of the idle-state eDRX cycle or the second PTW of the inactive-state eDRX cycle, a measurement cycle may be the quantity R2 of paging DRX cycles.

In a possible implementation, when intra-frequency or inter-frequency RRM measurement is performed,

that the RRM measurement is performed based on the second parameter set includes:

The RRM measurement is performed based on first duration, where the first duration is determined based on the second parameter set, and within the PTW corresponding to the first eDRX cycle, every first duration corresponds to one RRM measurement result.

In this implementation, when the UE in the inactive state performs intra-frequency or inter-frequency RRM measurement within the first PTW of the idle-state eDRX cycle or the second PTW of the inactive-state eDRX cycle, a measurement cycle may be the first duration.

In a possible implementation, the first paging DRX cycle or the second paging DRX cycle includes a paging DRX cycle T1 corresponding to a first PTW and a second PTW that do not overlap, and a paging DRX cycle T2 corresponding to a first PTW and a second PTW that overlap; or

the first paging DRX cycle or the second paging DRX cycle includes one of T1 and T2.

In a possible implementation, that the first paging DRX cycle or the second paging DRX cycle includes one of T1 and T2 includes:

The first paging DRX cycle or the second paging DRX cycle includes a smaller paging DRX cycle between T1 and T2; or

the first paging DRX cycle or the second paging DRX cycle includes a larger paging DRX cycle between T1 and T2.

In a possible implementation, the paging DRX cycle T1 corresponding to the first PTW and the second PTW that do not overlap includes an idle-state paging DRX cycle or an inactive-state paging DRX cycle.

In a possible implementation, that the paging DRX cycle T2 corresponding to the first PTW and the second PTW that overlap includes:

a paging DRX cycle T2-1 corresponding to an overlapping part of the first PTW and the second PTW that overlap, and a paging DRX cycle T2-2 corresponding to a non-overlapping part of the first PTW and the second PTW that overlap.

In a possible implementation, there is at least one pair of a first PTW and a second PTW that overlap.

In a possible implementation, the first paging DRX cycle includes an idle-state paging DRX cycle and an inactive-state paging DRX cycle.

In a possible implementation, the second paging DRX cycle is a paging DRX cycle corresponding to the first eDRX cycle.

In a possible implementation, any first PTW does not overlap any second PTW.

According to a second aspect, this application provides a communication apparatus. The apparatus includes:

a transceiver unit, configured to receive a reference signal; and
a processing unit, configured to: in an inactive state, perform radio resource management RRM measurement within a first paging time window PTW of an idle-state extended discontinuous reception eDRX cycle and/or a second PTW of an inactive-state eDRX cycle based on the reference signal, where the inactive-state eDRX cycle is greater than 10.24s.

In a possible implementation, the RRM measurement is performed based on a first parameter set, and the first parameter set includes a length of the idle-state eDRX cycle, a length of the inactive-state eDRX cycle, and a first paging DRX cycle.

In a possible implementation, the first parameter set further includes at least one of the following information: a length of the first PTW and a length of the second PTW.

In a possible implementation, the RRM measurement is performed based on a second parameter set, and the second parameter set includes a length of a first eDRX cycle and a second paging DRX cycle.

In a possible implementation, the second parameter set further includes the following information: a length of a PTW corresponding to the first eDRX cycle.

In a possible implementation, the first eDRX cycle is a larger one between the idle-state eDRX cycle and the inactive-state eDRX cycle, or the first eDRX cycle is a smaller one between the idle-state eDRX cycle and the inactive-state eDRX cycle, or the first eDRX cycle is the inactive-state eDRX cycle.

In a possible implementation, when RRM measurement is performed on a serving cell,

that the RRM measurement is performed based on the first parameter set includes:

The RRM measurement is performed based on a quantity R1 of paging DRX cycles, where the quantity R1 of paging DRX cycles is determined based on the first parameter set, and within the first PTW and the second PTW, every R1 paging DRX cycles correspond to one RRM measurement result.

In a possible implementation, when RRM measurement is performed on a serving cell,

that the RRM measurement is performed based on the second parameter set includes:

The RRM measurement is performed based on a quantity R2 of paging DRX cycles, where the quantity R2 of paging DRX cycles is determined based on the second parameter set, and within the PTW corresponding to the first eDRX cycle, every R2 paging DRX cycles correspond to one RRM measurement result.

In a possible implementation, when intra-frequency or inter-frequency RRM measurement is performed,

that the RRM measurement is performed based on the second parameter set includes:

The RRM measurement is performed based on first duration, where the first duration is determined based on the second parameter set, and within the PTW corresponding to the first eDRX cycle, every first duration corresponds to one RRM measurement result.

In a possible implementation, the first paging DRX cycle or the second paging DRX cycle includes a paging DRX cycle T1 corresponding to a first PTW and a second PTW that do not overlap, and a paging DRX cycle T2 corresponding to a first PTW and a second PTW that overlap; or

the first paging DRX cycle or the second paging DRX cycle includes one of T1 and T2.

In a possible implementation, that the first paging DRX cycle or the second paging DRX cycle includes one of T1 and T2 includes:

The first paging DRX cycle or the second paging DRX cycle includes a smaller paging DRX cycle between T1 and T2; or

the first paging DRX cycle or the second paging DRX cycle includes a larger paging DRX cycle between T1 and T2.

In a possible implementation, the paging DRX cycle T1 corresponding to the first PTW and the second PTW that do not overlap includes an idle-state paging DRX cycle or an inactive-state paging DRX cycle.

In a possible implementation, that the paging DRX cycle T2 corresponding to the first PTW and the second PTW that overlap includes:

a paging DRX cycle T2-1 corresponding to an overlapping part of the first PTW and the second PTW that overlap, and a paging DRX cycle T2-2 corresponding to a non-overlapping part of the first PTW and the second PTW that overlap.

In a possible implementation, there is at least one pair of a first PTW and a second PTW that overlap.

In a possible implementation, the first paging DRX cycle includes an idle-state paging DRX cycle and an inactive-state paging DRX cycle.

In a possible implementation, the second paging DRX cycle is a paging DRX cycle corresponding to the first eDRX cycle.

In a possible implementation, any first PTW does not overlap any second PTW.

According to a third aspect, this application provides a communication apparatus. The communication apparatus includes a processor, a transceiver, and a memory. The processor and the transceiver are coupled to the memory. The memory stores a computer program. The processor and the transceiver are configured to invoke the computer program in the memory, to enable the communication apparatus to perform the method according to any one of the implementations of the first aspect.

In a possible design, the communication apparatus may be a chip for implementing the method in the first aspect or a device including a chip.

According to a fourth aspect, this application provides a communication apparatus. The communication apparatus includes a processor and an interface circuit. The interface circuit is configured to receive a signal from a communication apparatus other than the communication apparatus and transmit the signal to the processor, or send a signal that comes from the processor to a communication apparatus other than the communication apparatus. The processor is configured to implement the method according to any one of the implementations of the first aspect through a logic circuit or by executing code instructions.

According to a fifth aspect, this application provides a computer-readable storage medium. The storage medium stores a computer program or instructions. When the computer program or instructions is/are executed by a computer, the method according to any one of the implementations of the first aspect is implemented.

According to a sixth aspect, this application provides a computer program product. When a computer reads and executes the computer program product, the computer is enabled to perform the method according to any one of the implementations of the first aspect.

For beneficial effects of the second aspect to the sixth aspect, refer to the beneficial effects of the first aspect. Details are not described herein again.

**BRIEF DESCRIPTION OF DRAWINGS**

FIG. 1 is a diagram of an architecture of a communication system 1000 to which embodiments of this application are applied;

FIG. 2 is a diagram of a paging DRX cycle;

FIG. 3 is a diagram of a case in which PTWs do not overlap according to an embodiment of this application;

FIG. 4 is a diagram of a case in which PTWs overlap according to an embodiment of this application;

FIG. 5 is a diagram of a paging DRX cycle in a case in which PTWs overlap according to an embodiment of this application;

FIG. 6 is a schematic flowchart of a measurement method according to an embodiment of this application;

FIG. 7 is a diagram of a scenario in which there is at least one pair of PTWs that overlap according to an embodiment of this application;

FIG. 8 is a diagram of a scenario in which there is not any pair of a first PTW and a second PTW that overlap according to an embodiment of this application;

FIG. 9 is a diagram of an RRM measurement scenario according to an embodiment of this application;

FIG. 10 is a diagram of another RRM measurement scenario according to an embodiment of this application;

FIG. 11 is a diagram of another RRM measurement scenario according to an embodiment of this application;

FIG. 12 is a diagram of another RRM measurement scenario according to an embodiment of this application;

FIG. 13 is a diagram of another RRM measurement scenario according to an embodiment of this application;

FIG. 14 is a diagram of another RRM measurement scenario according to an embodiment of this application;

FIG. 15 is a diagram of another RRM measurement scenario according to an embodiment of this application;

FIG. 16 is a diagram of another RRM measurement scenario according to an embodiment of this application;

FIG. 17 is a diagram of another RRM measurement scenario according to an embodiment of this application;

FIG. 18 is a diagram of another RRM measurement scenario according to an embodiment of this application;

FIG. 19 is a diagram of another RRM measurement scenario according to an embodiment of this application;

FIG. 20 is a diagram of a possible structure of a communication apparatus according to an embodiment of this application; and

FIG. 21 is a diagram of a possible structure of a communication apparatus according to an embodiment of this application.

**DESCRIPTION OF EMBODIMENTS**

The following further describes specific embodiments of this application in detail with reference to accompanying drawings.

In this specification, the claims, and the accompanying drawings of this application, the terms "first", "second", and the like are intended to distinguish between different objects, but not to describe a specific sequence. In addition, the terms "include", "have", and any variants thereof are intended to cover a non-exclusive inclusion. For example, a process, a method, a system, a product, or a device that includes a series of steps or units is not limited to the listed steps or units, but optionally further includes steps or units that are not listed, or optionally further includes other steps or units inherent to the process, the method, the product, or the device.

An "embodiment" mentioned in this specification indicates that a specific feature, structure, or characteristic described with reference to the embodiment may be included in one or more embodiments of this application. The term appearing at various positions in this specification does not necessarily mean a same embodiment, and neither means an independent or alternative embodiment mutually exclusive with another embodiment. It is explicitly and implicitly understood by persons skilled in the art that embodiments described in this specification may be combined with another embodiment.

In this application, "at least one (item)" means one or more, "a plurality of" means two or more, "at least two (items)" means two, three, or more, and "and/or" is used to describe an association relationship between associated objects, and indicates that three relationships may exist. For example, "A and/or B" may indicate the following three cases: Only A exists, only B exists, and both A and B exist, where A and B may be in a singular form or a plural form. The character "/" usually indicates an "or" relationship between the associated objects. "At least one of the following items (pieces)" or a similar expression thereof indicates any combination of the items, including one of the items (pieces) or any combination of a plurality of the items (pieces). For example, at least one of a, b, or c may indicate a, b, c, "a and b", "a and c", "b and c", or "a, b, and c", where a, b, and c may be in a singular form or a plural form.

For ease of understanding embodiments of this application, the following first describes a system architecture in embodiments of this application.

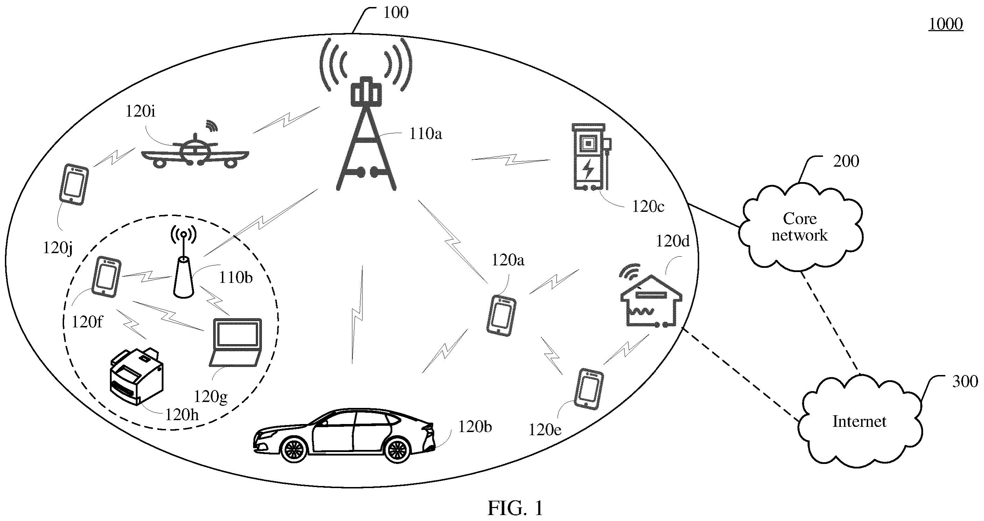

FIG. 1 is a diagram of an architecture of a communication system 1000 to which embodiments of this application are applied. As shown in FIG. 1, the communication system includes a radio access network 100 and a core network 200. Optionally, the communication system 1000 may further include an internet 300. The radio access network 100 may include at least one radio access network device (for example, 110a and 110b in FIG. 1), and may further include at least one terminal (for example, 120a to 120j in FIG. 1). The terminal is connected to the radio access network device in a wireless manner, and the radio access network device is connected to the core network in a wireless or wired manner. A core network device and the radio access network device may be different physical devices independent of each other, or functions of the core network device and logical functions of the radio access network device may be integrated into one physical device, or some functions of the core network device and some functions of the radio access network device may be integrated into one physical device. Terminals may be connected to each other in a wired or wireless manner, and radio access network devices may be connected to each other in a wired or wireless manner. FIG. 1 is only a diagram. The communication system may further include other network devices, for example, may further include a wireless relay device and a wireless backhaul device that are not shown in FIG. 1.

The radio access network device (or referred to as an access network device) is an access device used by the terminal to access the communication system in a wireless manner. The radio access network device may be a base station (base station), an evolved NodeB (evolved NodeB, eNodeB), a transmission and reception point (transmission and reception point, TRP), a next-generation NodeB (next-generation NodeB, gNB) in a fifth-generation (5th generation, 5G) mobile communication system, a next-generation base station in a sixth-generation (6th generation, 6G) mobile communication system, a base station in a future mobile communication system, an access node in a Wi-Fi system, or the like; or may be a module or a unit that performs some functions of a base station, for example, may be a central unit (central unit, CU) or a distributed unit (distributed unit, DU). The CU herein performs functions of a radio resource control protocol and a packet data convergence protocol (packet data convergence protocol, PDCP) of the base station, and may further perform a function of a service data adaptation protocol (service data adaptation protocol, SDAP). The DU performs functions of a radio link control layer and a media access control (media access control, MAC) layer of the base station, and may further perform some or all functions of a physical layer. For specific descriptions of the foregoing protocol layers, refer to related technical specifications of the 3rd generation partnership project (3rd generation partnership project, 3GPP). The radio access network device may be a macro base station (for example, 110a in FIG. 1), or may be a micro base station or an indoor base station (for example, 110b in FIG. 1), or may be a relay node, a donor node, or the like. A specific technology and a specific device form that are used for the radio access network device are not limited in embodiments of this application. For ease of description, a network device is short for the radio access network device, and a base station is used as an example of the radio access network device.

The terminal is a device with a wireless transceiver function, and may send a signal to the base station, or receive a signal from the base station. The terminal may also be referred to as a terminal device, user equipment (user equipment, UE), a mobile station, a mobile terminal, or the like. The terminal may be widely used in various scenarios, for example, device-to-device (device-to-device, D2D), vehicle-to-everything (vehicle-to-everything, V2X) communication, machine type communication (machine type communication, MTC), an internet of things (internet of things, IoT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an airplane, a ship, a robot, a robotic arm, a smart home device, or the like. A specific technology and a specific device form that are used for the terminal are not limited in embodiments of this application.

The base station and the terminal may be at fixed positions, or may be movable. The base station and the terminal may be deployed on land, including an indoor or outdoor scenario and a handheld or vehicle-mounted scenario, or may be deployed on water, or may be deployed on an airplane, a balloon, or an artificial satellite. Application scenarios of the base station and the terminal are not limited in embodiments of this application.

Roles of the base station and the terminal may be relative roles. For example, a helicopter or an uncrewed aerial vehicle 120i in FIG. 1 may be configured as a mobile base station. For a terminal 120j accessing the radio access network 100 through 120i, the terminal 120i is a base station. However, for a base station 110a, 120i is a terminal. To be specific, 110a and 120i communicate with each other based on a radio air interface protocol. Certainly, 110a and 120i may alternatively communicate with each other based on an interface protocol between base stations. In this case, for 110a, 120i is also a base station. Therefore, both the base station and the terminal may be collectively referred to as communication apparatuses. 110a and 110b in FIG. 1 may be referred to as communication apparatuses with a base station function. 120a to 120j in FIG. 1 may be referred to as communication apparatuses with a terminal function.

Communication between the base station and the terminal, between base stations, or between terminals may be performed by using a licensed spectrum, or may be performed by using an unlicensed spectrum, or may be performed by using both a licensed spectrum and an unlicensed spectrum. Communication may be performed by using a spectrum below 6 gigahertz (gigahertz, GHz), or may be performed by using a spectrum above 6 GHz, or may be performed by using both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. A function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried in a downlink channel; and the terminal sends an uplink signal or uplink information to the base station, where the uplink information is carried in an uplink channel. To communicate with the base station, the terminal needs to establish a wireless connection to a cell controlled by the base station. The cell to which the terminal establishes the wireless connection is referred to as a serving cell of the terminal. When communicating with the serving cell, the terminal is also subject to interference from a signal of a neighboring cell.

For ease of understanding related content in embodiments of this application, the following describes some knowledge needed in the solutions of this application. It should be noted that the descriptions are intended to make embodiments of this application easier to understand, but should not be construed as a limitation on the protection scope claimed in this application.

1. DRX mechanism of UE

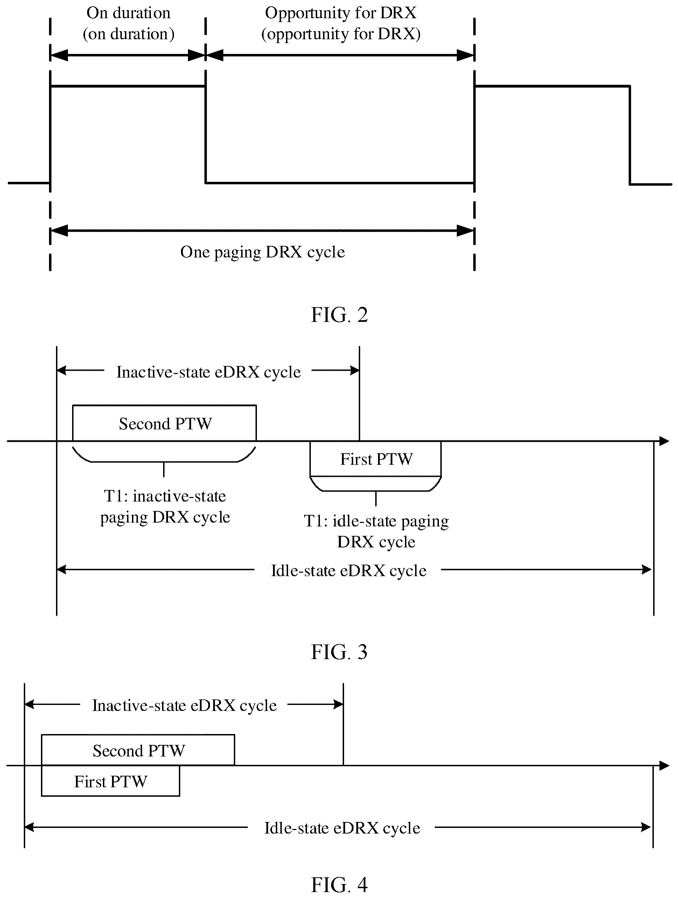

A terminal device in an RRC idle state or an RRC inactive state may periodically wake up based on the DRX mechanism to monitor a paging message. A cycle of periodic wake-up may be referred to as a paging DRX cycle or a DRX cycle, and a position of wake-up is referred to as a PO. As shown in FIG. 2, the paging DRX cycle may include two parts: on duration (on duration) and an opportunity for DRX (opportunity for DRX). Time of the "on duration" includes at least one PO. Time of the "opportunity for DRX" includes no PO, and the terminal device is in a sleep state to reduce power consumption.

It should be understood that, in embodiments of this application, the paging DRX cycle includes an idle-state paging DRX cycle (DRX_idle cycle) and an inactive-state paging DRX cycle (DRX_inactive cycle).

2. eDRX mechanism of UE

In R17, in addition to DRX, a terminal device may alternatively periodically wake up by using the eDRX mechanism to monitor a PO. A cycle of periodic wake-up may be referred to as an eDRX cycle. A difference between DRX and eDRX lies in different cycle duration, and the eDRX cycle is greater than the paging DRX cycle. Therefore, in the eDRX mechanism, sleep duration of the terminal device can be increased, to reduce a quantity of times of periodic wake-up, and further reduce power consumption.

It should be understood that, in embodiments of this application, the eDRX cycle includes an idle-state eDRX cycle (eDRX_idle cycle) and an inactive-state eDRX cycle (eDRX_inactive cycle).

3. PTW

Currently, a length range of an idle-state eDRX cycle is as follows: 2.56s≤eDRX_IDLE cycle length≤10485.76s. When the idle-state eDRX cycle is greater than 10.24s, a concept of a PTW is introduced, and UE can monitor paging only within the PTW. To save power, the UE also performs RRM measurement within the PTW. Usually, one eDRX cycle may include one PTW, and one PTW may include one or more paging DRX cycles.

4. RRM measurement

The RRM measurement includes RRM measurement on a serving cell, and intra-frequency or inter-frequency RRM measurement. The RRM measurement on the serving cell includes cell measurement, cell selection criterion evaluation, and the like. The intra-frequency or inter-frequency RRM measurement includes one or more of cell identification, cell measurement, reselection criterion evaluation, and the like.

5. Serving cell

The serving cell is a cell that currently provides a communication service for a terminal device. The serving cell may alternatively be described as a cell on which a terminal device currently camps.

6. Intra-frequency measurement (intra-frequency measurement) and inter-frequency measurement (inter-frequency measurement)

In the intra-frequency measurement, for example, SSB-based intra-frequency measurement, a center frequency of an SSB of a serving cell in which UE is currently located and a center frequency of an SSB of a neighboring cell indicated for measurement are the same, and subcarrier spacings (subcarrier spacing, SCS) of the two SSBs are also the same. In the inter-frequency measurement, an SSB center frequency, indicated for measurement, of a serving cell in which UE is currently located is different from an SSB center frequency of a neighboring cell, or SCSs of the serving cell and the neighboring cell are different. That is, the intra-frequency measurement is measurement in which SSB center frequencies and SCSs of a serving carrier and a target carrier are the same, and the inter-frequency measurement is measurement in which SSB center frequencies or SCSs of a serving carrier and a target carrier are different. The serving carrier is a carrier on which a serving cell is located, and the target carrier is a carrier on which a to-be-measured cell is located. For example, the to-be-measured cell may be a neighboring cell of the serving cell.

7. PTWs do not overlap.

That PTWs do not overlap may be that two PTWs completely have no overlapping/coinciding part, as shown in FIG. 3, or may be that the PTWs overlap only at endpoints of the PTWs. It should be noted that, when two PTWs do not overlap, a paging DRX cycle T1 may be defined. Still refer to FIG. 3. For a first PTW, to be specific, a PTW in an idle-state eDRX cycle, the paging DRX cycle T1 is an idle-state paging DRX cycle. For a second PTW, to be specific, a PTW in an inactive-state eDRX cycle, the paging DRX cycle T1 is an inactive-state paging DRX cycle. That is, the paging DRX cycle T1 may include an idle-state paging DRX cycle or an inactive-state paging DRX cycle.

8. PTWs overlap.

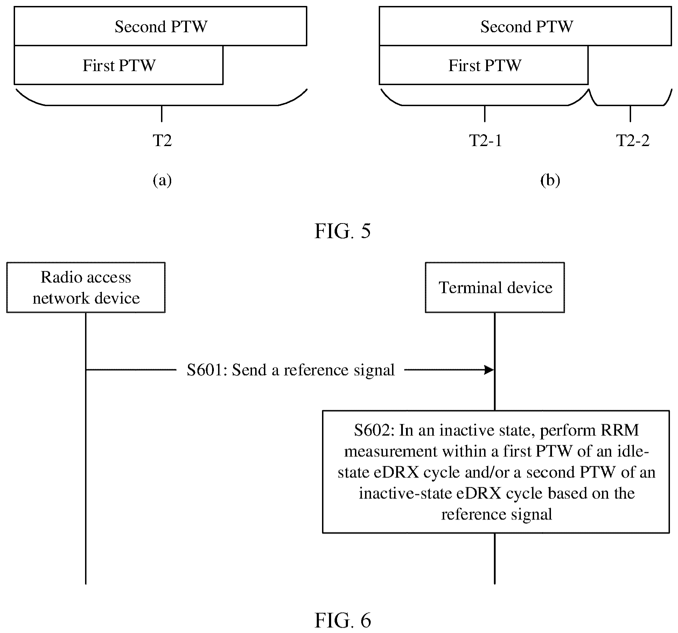

Usually, if two PTWs have an overlapping/coinciding part, it is considered that the two PTWs overlap. Optionally, that PTWs overlap may alternatively be defined as follows: Start points of two PTWs are aligned, but lengths of the PTWs may be different. For example, FIG. 4 is a diagram of a case in which PTWs overlap according to an embodiment of this application. As shown in FIG. 4, start points of a first PTW and a second PTW are aligned. In other words, the first PTW and the second PTW overlap.
It should be noted that, when two PTWs overlap, a unified paging DRX cycle may be defined. As shown in (a) in FIG. 5, a first PTW and a second PTW that overlap correspond to a paging DRX cycle T2. Optionally, a paging DRX cycle corresponding to an overlapping part of a first PTW and a second PTW that overlap, and a paging DRX cycle corresponding to a non-overlapping part of the first PTW and the second PTW that overlap may be separately defined. As shown in (b) in FIG. 5, an overlapping part of a first PTW and a second PTW that overlap corresponds to a paging DRX cycle T2-1, and a non-overlapping part of the first PTW and the second PTW that overlap corresponds to a paging DRX cycle T2-2.
It should be understood that, in embodiments of this application, a PTW corresponding to an idle-state eDRX cycle is a first PTW, and a PTW corresponding to an inactive-state eDRX cycle is a second PTW.
It should be noted that, currently, R17 specifies only measurement behavior of UE in an idle state and UE in an inactive state within a single PTW (to be specific, a PTW introduced when an idle-state eDRX cycle is greater than 10.24s). For details, refer to TS 38.133. In R18, a case in which an inactive eDRX cycle is also greater than 10.24s is to be introduced, that is, another PTW is to be introduced. When there are two PTWs (one is a PTW of idle eDRX, and the other is a PTW of inactive eDRX), how UE in an inactive state performs measurement is a problem to be urgently resolved.
Based on this, embodiments of this application provide a measurement method and a related apparatus, to enable a terminal device to perform RRM measurement when there are two PTWs. This facilitates energy saving for the terminal device.
The following describes in detail a measurement method and a communication apparatus that are provided in this application.
FIG. 6 is a schematic flowchart of a measurement method according to an embodiment of this application. As shown in FIG. 6, the measurement method includes the following steps S601 and S602. The method shown in FIG. 6 may be performed by a terminal device or a chip in a terminal device. In the following embodiments of this application, an example in which the method is performed by a terminal device is used for description. It should be noted that FIG. 6 is a schematic flowchart of a method embodiment of this application, and shows detailed communication steps or operations of the method. However, these steps or operations are merely examples. Other operations or variants of various operations in FIG. 6 may alternatively be performed in embodiments of this application. In addition, the steps in FIG. 6 may be performed in an order different from an order shown in FIG. 6, and not all of the operations in FIG. 6 may be performed.

S601: The terminal device receives a reference signal.

For example, the reference signal may be a synchronization signal block (synchronization signal block, SSB) or a channel state information reference signal (channel state information reference signal, CSI-RS). This is not limited herein.

S602: In an inactive state, the terminal device performs RRM measurement within a first PTW of an idle-state eDRX cycle and/or a second PTW of an inactive-state eDRX cycle based on the reference signal.

In other words, the terminal device in the inactive state may perform RRM measurement within the first PTW of the idle-state eDRX cycle and/or the second PTW of the inactive-state eDRX cycle based on the reference signal.

Herein, the inactive-state eDRX cycle is greater than a first threshold, where for example, the first threshold may be 10.24s; and the idle-state eDRX cycle is greater than a second threshold, where for example, the second threshold may also be 10.24s. It should be understood that, in this embodiment of this application, there are the following two cases for configuring the first PTW of the idle-state eDRX cycle and the second PTW of the inactive-state eDRX cycle.

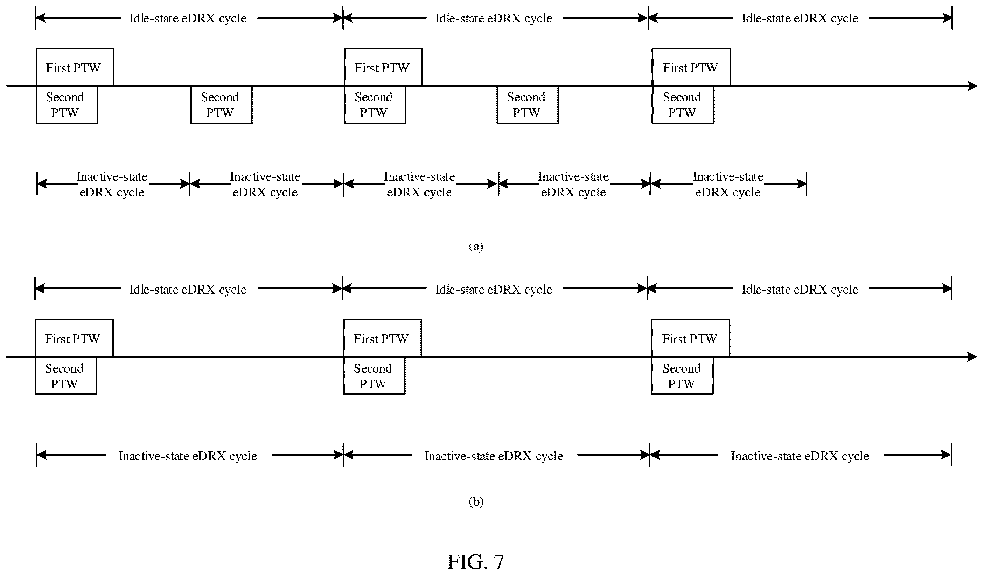

Case 1: There is at least one pair of a first PTW and a second PTW that overlap. For example, FIG. 7 is a diagram of a scenario in which there is at least one pair of PTWs that overlap according to an embodiment of this application. As shown in (a) in FIG. 7, when an idle-state eDRX cycle is greater than an inactive-state eDRX cycle, there is at least one pair of a first PTW and a second PTW that overlap, and there are also some second PTWs that do not overlap a first PTW. Optionally, as shown in (b) in FIG. 7, when an idle-state eDRX cycle is the same as an inactive-state eDRX cycle, a first PTW and a second PTW may overlap in a one-to-one correspondence.

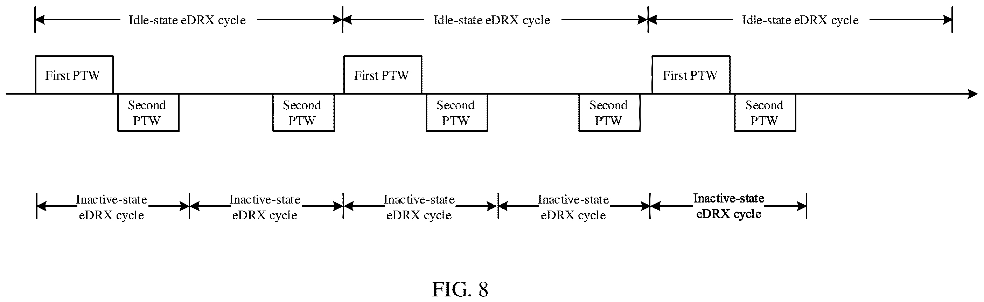

Case 2: Any first PTW does not overlap any second PTW. In other words, there is not any pair of a first PTW and a second PTW that overlap. For example, FIG. 8 is a diagram of a scenario in which there is not any pair of a first PTW and a second PTW that overlap according to an embodiment of this application.

It should be understood that, when RRM measurement is performed within the first PTW of the idle-state eDRX cycle and the second PTW of the inactive-state eDRX cycle, the RRM measurement may be specifically performed based on a first parameter set. The first parameter set includes a length of the idle-state eDRX cycle (namely, eDRX_idle cycle length), a length of the inactive-state eDRX cycle (namely, eDRX_inactive cycle length), and a first paging DRX cycle. It should be understood that, in the case 1, the first paging DRX cycle includes at least one of a paging DRX cycle T1 corresponding to a first PTW and a second PTW that do not overlap, and a paging DRX cycle T2 corresponding to a first PTW and a second PTW that overlap. For example, the first paging DRX cycle includes T1 and T2, or the first paging DRX cycle includes T1, or the first paging DRX cycle includes T2. In the case 2, the first paging DRX cycle includes an idle-state paging DRX cycle and an inactive-state paging DRX cycle. Optionally, the first parameter set may further include one or more of a length of the first PTW, a length of the second PTW, a scaling factor, and the like. This is not limited herein.

Optionally, when RRM measurement is performed within the first PTW of the idle-state eDRX cycle or the second PTW of the inactive-state eDRX cycle, the RRM measurement may be specifically performed based on a second parameter set. The second parameter set includes a length of a first eDRX cycle and a second paging DRX cycle. Optionally, the second parameter set may further include one or more of a length of a PTW corresponding to the first eDRX cycle, a scaling factor, and the like. This is not limited herein. The first eDRX cycle may be one of the idle-state eDRX cycle or the inactive-state eDRX cycle. For example, the first eDRX cycle may be a larger one between the idle-state eDRX cycle and the inactive-state eDRX cycle. For example, the larger eDRX cycle is the idle-state eDRX cycle. In another example, the first eDRX cycle may alternatively be a smaller one between the idle-state eDRX cycle and the inactive-state eDRX cycle. For example, the smaller eDRX cycle is the inactive-state eDRX cycle. In another example, the first eDRX cycle is the inactive-state eDRX cycle by default. For example, the first eDRX cycle may be predefined, configured, or preconfigured to be the inactive-state eDRX cycle. Herein, "predefined" may be understood as being defined in a standard, without configuration by another device (and another device cannot perform modification), and indicates information prerecorded/pre-written in hardware and/or software of the terminal device. "Configured" includes being configured by a network device and being configured by the terminal device. If configuration is performed by the network device, the configuration may be changed by using a SIB or RRC signaling. If configuration is performed by the terminal device, the configuration may be changed based on PC5-RRC signaling. "Preconfigured" may be understood as that information is prerecorded/pre-written in hardware and/or software of the terminal device, is determined by a device manufacturer, and may be changed by using software or hardware.

It should be noted that, in this embodiment of this application, the RRM measurement includes RRM measurement on a serving cell, and intra-frequency or inter-frequency RRM measurement. The intra-frequency or inter-frequency RRM measurement includes one or more of cell identification, cell measurement, reselection criterion evaluation, and the like. It should be understood that a measurement cycle of the RRM measurement on the serving cell may be understood as including a quantity R1 of paging DRX cycles or a quantity R2 of paging DRX cycles, and a measurement cycle of the intra-frequency or inter-frequency RRM measurement may be understood as including first duration. Details are as follows:

① When the terminal device performs RRM measurement on the serving cell, the RRM measurement on the serving cell may be performed based on the first parameter set or the second parameter set. For example, that the RRM measurement on the serving cell is performed based on the first parameter set may be understood as follows: The RRM measurement on the serving cell is performed based on the quantity R1 of paging DRX cycles, where the quantity R1 of paging DRX cycles is determined based on the first parameter set. To be specific, the terminal device may determine, based on the first parameter set, that a measurement cycle of the RRM measurement is the quantity R1 of paging DRX cycles. Therefore, the terminal device may continuously perform measurement in R1 paging DRX cycles within the first PTW and the second PTW, and perform cell selection criterion evaluation once (this may alternatively be described as outputting one RRM measurement result) in every R1 paging DRX cycles. In another example, that the RRM measurement on the serving cell is performed based on the second parameter set may be understood as follows: The RRM measurement on the serving cell is performed based on the quantity R2 of paging DRX cycles, where the quantity R2 of paging DRX cycles is determined based on the second parameter set. To be specific, the terminal device may determine, based on the second parameter set, that a measurement cycle of the RRM measurement is the quantity R2 of paging DRX cycles. Therefore, the terminal device may continuously perform measurement in R1 paging DRX cycles within a PTW (for example, the first PTW or the second PTW) corresponding to the first eDRX cycle (for example, the idle-state eDRX cycle or the inactive-state eDRX cycle), and perform cell selection criterion evaluation once in every R2 paging DRX cycles. In short, both the quantity R1 of paging DRX cycles and the quantity R2 of paging DRX cycles may be understood as measurement cycles for performing RRM measurement on the serving cell by the terminal device. A difference lies in that, when a measurement cycle is the quantity R1 of paging DRX cycles, the terminal device performs measurement within both the first PTW and the second PTW; or when a measurement cycle is the quantity R2 of paging DRX cycles, the terminal device performs measurement within the first PTW or the second PTW. The quantity R1 of paging DRX cycles is determined based on the first parameter set, and the quantity R2 of paging DRX cycles is determined based on the second parameter set. The following separately describes a correspondence between the first parameter set and the quantity R1 of paging DRX cycles and a correspondence between the second parameter set and the quantity R2 of paging DRX cycles. Details are not described herein.

(2) When the intra-frequency or inter-frequency RRM measurement is performed, the intra-frequency or inter-frequency RRM measurement may be performed based on the second parameter set. For example, that the intra-frequency or inter-frequency RRM measurement is performed based on the second parameter set may be understood as follows: The intra-frequency or inter-frequency RRM measurement is performed based on the first duration, where the first duration is determined based on the second parameter set. To be specific, the terminal device may determine, based on the second parameter set, that a measurement cycle of the RRM measurement is the first duration. Therefore, the terminal device may obtain one RRM measurement result in every first duration within a PTW (for example, the first PTW or the second PTW) corresponding to the first eDRX cycle (for example, the idle-state eDRX cycle or the inactive-state eDRX cycle). In short, the first duration may be understood as a measurement cycle for performing intra-frequency or inter-frequency RRM measurement by the terminal device, and during the intra-frequency or inter-frequency RRM measurement, the terminal device performs measurement within the first PTW or the second PTW. The first duration may be determined based on the second parameter set. The following further describes a correspondence between the second parameter set and the first duration. Details are not described herein.

It should be understood that the intra-frequency or inter-frequency RRM measurement includes one or more of cell identification, cell measurement, reselection criterion evaluation, and the like. Therefore, for the intra-frequency or inter-frequency RRM measurement, if cell identification is performed, the first duration is a measurement cycle for performing cell identification; if cell measurement is performed, the first duration is a measurement cycle for performing cell measurement; or if reselection criterion evaluation is performed, the first duration is a measurement cycle for performing reselection criterion evaluation.

The following separately describes in detail the RRM measurement on the serving cell and the intra-frequency or inter-frequency RRM measurement in the case 1 and the case 2.

I. In the case 1 (there is at least one pair of a first PTW and a second PTW that overlap):

(1) If the RRM measurement on the serving cell is performed, the terminal device may perform measurement based on the first parameter set. In a possible example, the terminal device performs measurement within the first PTW and the second PTW, and does not perform measurement out of the first PTW or the second PTW. The first paging DRX cycle in the first parameter set includes the following four cases.

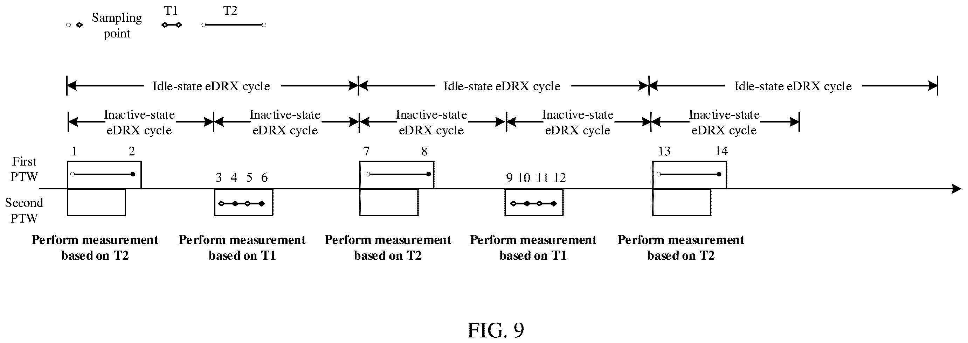

1. The first paging DRX cycle may include a paging DRX cycle T1 corresponding to a first PTW and a second PTW that do not overlap, and a paging DRX cycle T2 corresponding to a first PTW and a second PTW that overlap. To be specific, when performing RRM measurement on the serving cell based on the first parameter set, the terminal device may perform measurement based on T1 within the first PTW and the second PTW that do not overlap, and perform measurement based on T2 within the first PTW and the second PTW that overlap, as shown in FIG. 9.

It should be understood that, for a correspondence between the quantity R1 of paging DRX cycles and the first parameter set, reference may be made to the following Table 1. To be specific, the quantity R1 of paging DRX cycles may be determined based on the first parameter set and Table 1. For example, when a length range of the idle-state eDRX cycle meets a condition of $20.48 \leq eDRX\_idle$ cycle length $\leq 10485.76$, a length range of the inactive-state eDRX cycle meets a condition of $20.48 \leq eDRX\_inactive$ cycle length $\leq 10485.76$, T1=0.32s, T2=0.32s, a length of the first PTW is 1.28s, a length of the second PTW is 1.28s, and a scaling factor is 1, the quantity R1 of paging DRX cycles is equal to $N1 \times M1 \times 2$. N1 represents the scaling factor (determined based on a quantity of downlink receive beams on which UE performs beam sweeping), and M1 represents a conditional coefficient. For example, when an SSB-based measurement timing configuration (SSB-based measurement timing configuration, SMTC) cycle is greater than 20 ms and a paging DRX cycle is less than 0.64s, M1 is 2; otherwise, M1 is 1. It should be noted that M1 in this embodiment of this application is merely an example, and whether M1 exists and a value of M1 may vary. It should be understood that meanings of N1 and M1 appearing in the following tables are the same as the meanings of N1 and M1 in Table 1, and details are not described again subsequently.

It should be understood that values (for example, 0.32, 0.64, and $N1 \times M1 \times 2$) of various parameters (for example, a paging DRX cycle T1 and R1 in Table 1) shown in all tables (for example, Table 1) in this embodiment of this application are merely examples, and the parameters may alternatively have other values. This is specifically determined based on an actual scenario, and is not limited herein.

Table 1

| Length of an idle-state eDRX cycle [s] | Length of an inactive-state eDRX cycle [s] | Paging DRX cycle T1 [s] | Paging DRX cycle T2 [s] | Length of a first PTW [s] (a multiple of 1.28s) | Length of a second PTW [s] (a multiple of 1.28s) | Scaling factor (N1) | R1 [a quantity of paging DRX cycles] |
|---|---|---|---|---|---|---|---|
| 20.48≤eDRX_ idle cycle length≤10485. 76 | 20.48≤eDRX_ inactive cycle length≤10485. 76 | 0.32 | 0.32 | ≥[1.28] (1) | ≥[1.28] (1) | 1 | N1×M1× 2 |
| | | 0.64 | 0.64 | ≥1.28 (1) (M1=1) or ≥2.56 (2) (M1=2) | ≥1.28 (1) (M1=1) or ≥2.56 (2) (M1=2) | 1 | N1×M1× 2 |
| | | 1.28 | 1.28 | ≥2.56 (2) | ≥2.56 (2) | 1 | N1×2 |
| | | 2.56 | 2.56 | ≥5.12 (4) | ≥5.12 (4) | 1 | N1×2 |
| Length of an idle-state eDRX cycle [s] | Length of an inactive-state eDRX cycle [s] | Paging DRX cycle T1 [s] | Paging DRX cycle T2 [s] | Length of a first PTW [s] (a multiple of 1.28s) | Length of a second PTW [s] (a multiple of 1.28s) | Scaling factor (N1) | R1 [a quantity of paging DRX cycles] |

Note 1: The quantity of paging DRX cycles in this table is given based on the paging DRX cycle T2 within overlapping PTWs and based on the paging DRX cycle T1 within non-overlapping PTWs.

Note 2: For the length of the idle-state eDRX cycle and the length of the inactive-state eDRX cycle, refer to the section 10.5.5.32 in TS 24.008.

Note 3: A lower bound of the length of the first PTW is derived based on

$$\left\lceil \frac{R1*DRX\_idle\ cycle}{1.28} \right\rceil * 1.28,$$

and a lower bound of the length of the second PTW is derived

$$\left\lceil \frac{R1*DRX\_inactive\ cycle}{1.28} \right\rceil * 1.28.$$

based on

Note 4: The paging DRX cycle T1 is determined according to a criterion 1, and the paging DRX cycle T2 is determined according to a criterion 2. For the criterion 1 and the criterion 2, refer to TS 38.304.

Optionally, the note 1 in Table 1 may alternatively be described as follows: "The quantity of paging DRX cycles in this table is derived from the paging DRX cycle T2 within overlapping PTWs and from the paging DRX cycle T1 within non-overlapping PTWs." Optionally, the note 1 in Table 1 may alternatively be described as follows: "The quantity of paging DRX cycles in this table is determined based on the paging DRX cycle T2 within overlapping PTWs and based on the paging DRX cycle T1 within non-overlapping PTWs."

Optionally, the note 1 in Table 1 may alternatively be described as follows: "The quantity of paging DRX cycles in this table is given based on the paging DRX cycle T2 within an idle-state PTW (that is, the first PTW) and based on the paging DRX cycle T1 within an inactive-state PTW (that is, the second PTW)." Optionally, the note 1 in Table 1 may alternatively be described as follows: "The quantity of paging DRX cycles in this table is derived from the paging DRX cycle T2 within an idle-state PTW (that is, the first PTW) and from the paging DRX cycle T1 within an inactive-state PTW (that is, the second PTW)." Optionally, the note 1 may alternatively be described as follows "The quantity of paging DRX cycles in this table is determined based on the paging DRX cycle T2 within an idle-state PTW (that is, the first PTW) and based on the paging DRX cycle T1 within an inactive-state PTW (that is, the second PTW)."

It should be understood that, in notes 1 in the following tables in this embodiment of this application, the expression "given based on xxx" may be replaced with "derived from xxx" or "determined based on xxx", and details are not described again subsequently.

For example, the following assumption is made: It is learned, based on Table 1, that the quantity R1 of paging DRX cycles corresponding to the first parameter set is 2. To be specific, during measurement on the serving cell, cell selection criterion (namely, s criterion) evaluation is performed once after measurement is continuously performed in two paging DRX cycles. To be specific, every two paging DRX cycles correspond to one RRM measurement result.

As shown in FIG. 9, within a first PTW and a second PTW, measurement starts from a sampling point 1, and cell selection criterion evaluation is performed once after measurement is completed at a sampling point 2, to be specific, an RRM measurement result is output at the sampling point 2. Correspondingly, cell selection criterion evaluation is performed once after measurement is performed at a sampling point 3 and a sampling point 4, to be specific, an RRM measurement result is output at the sampling point 4; cell selection criterion evaluation is performed once after measurement is performed at a sampling point 5 and a sampling point 6, to be specific, an RRM measurement result is output at the sampling point 6; ...; and cell selection criterion evaluation is performed once after measurement is performed at a sampling point 13 and a sampling point 14, to be specific, an RRM measurement result is output at the sampling point 14.

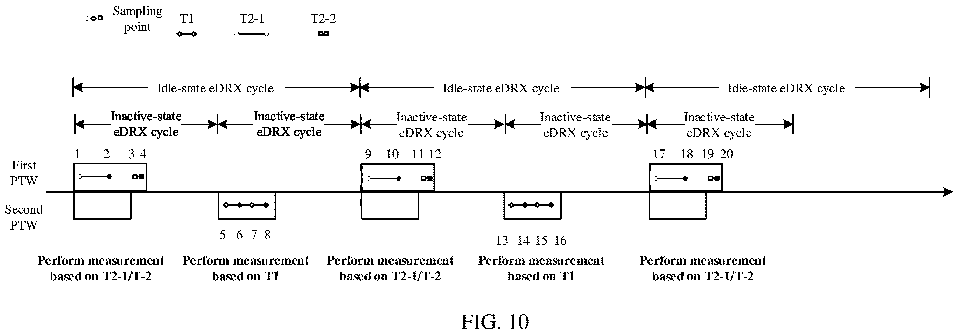

2. The first paging DRX cycle may include a paging DRX cycle T1 corresponding to a first PTW and a second PTW that do not overlap, a paging DRX cycle T2-1 corresponding to an overlapping part of a first PTW and a second PTW that overlap, and a paging DRX cycle T2-2 corresponding to a non-overlapping part of the first PTW and the second PTW that overlap. To be specific, when performing RRM measurement on the serving cell based on the first parameter set, the terminal device may perform measurement based on T1 within the first PTW and the second PTW that do not overlap, perform measurement based on T2-1 within the overlapping part of the first PTW and the second PTW that overlap, and perform measurement based on T2-2 within the non-overlapping part of the first PTW and the second PTW that overlap, as shown in FIG. 10.

It should be understood that, for a correspondence between the quantity R1 of paging DRX cycles and the first parameter set, reference may be made to the following Table 2. To be specific, the quantity R1 of paging DRX cycles is determined based on the first parameter set and Table 2. For example, when a length range of the idle-state eDRX cycle meets a condition of $20.48 \leq eDRX\_idle$ cycle length $\leq 10485.76$, a length range of the inactive-state eDRX cycle meets a condition of $20.48 \leq eDRX\_inactive$ cycle length $\leq 10485.76$, T1=0.32s, T2-1=0.32s, T2-2=0.32s, a length of the first PTW is 1.28s, a length of the second PTW is 1.28s, and a scaling factor is 1, the quantity R1 of paging DRX cycles is equal to $N1 \times M1 \times 2$. For understanding of N1 and M1, refer to related descriptions of Table 1. Details are not described herein again.

Table 2

| Length of an idle-state eDRX cycle [s] | Length of an inactive-state eDRX cycle [s] | Paging DRX cycle T1 [s] | Paging DRX cycle T2-1 [s] | Paging DRX cycle T2-2 [s] | Length of a first PTW [s] (a multiple of 1.28s) | Length of a second PTW [s] (a multiple of 1.28s) | Scaling factor (N1) | R1 [a quantity of paging DRX cycles] |
|---|---|---|---|---|---|---|---|---|
| 20.48≤eDRX_ idle cycle length≤10485. 76 | 20.48≤eDRX_ inactive cycle length≤10485. 76 | 0.32 | 0.32 | 0.32 | ≥[1.28] (1) | ≥[1.28] (1) | 1 | N1×M1 ×2 |
| | | 0.64 | 0.64 | 0.64 | ≥1.28 (1) (M1=1) or ≥2.56 (2) (M1=2) | ≥1.28 (1) (M1=1) or ≥2.56 (2) (M1=2) | 1 | N1×M1 ×2 |
| | | 1.28 | 1.28 | 1.28 | ≥2.56 (2) | ≥2.56 (2) | 1 | N1×2 |
| | | 2.56 | 2.56 | 2.56 | ≥5.12 (4) | ≥5.12 (4) | 1 | N1×2 |

Note 1: The quantity of paging DRX cycles in this table is given based on the paging DRX cycles T2-1 and T2-2 within overlapping PTWs and based on the paging DRX cycle T1 within non-overlapping PTWs.

Note 2: For the length of the idle-state eDRX cycle and the length of the inactive-state eDRX cycle, refer to the section 10.5.5.32 in TS 24.008.

Note 3: A lower bound of the length of the first PTW is derived based on

$$\left\lceil \frac{R1*DRX\_idle\ cycle}{1.28} \right\rceil * 1.28,$$

and a lower bound of the length of the second PTW is derived

$$\left\lceil \frac{R1*DRX\_inactive\ cycle}{1.28} \right\rceil * 1.28.$$

based on

Note 4: The paging DRX cycle T1 is determined according to a criterion 1, the paging DRX cycle T2-1 is determined according to a criterion 3, and the paging DRX cycle T2-2 is determined according to a criterion 4. For the criterion 1, the criterion 3, and the criterion 4, refer to TS 38.304.

Optionally, the note 1 in Table 2 may alternatively be described as follows: "The quantity of paging DRX cycles in this table is given based on the paging DRX cycles T2-1 and T2-2 within an idle-state PTW (that is, the first PTW) and based on the paging DRX cycle T1 within an inactive-state PTW (that is, the second PTW)."

For example, the following assumption is made: It is learned, based on Table 2, that the quantity R1 of paging DRX cycles corresponding to the first parameter set is 2. To be specific, during measurement on the serving cell, cell selection criterion (namely, s criterion) evaluation is performed once after measurement is continuously performed in two paging DRX cycles. To be specific, every two paging DRX cycles correspond to one RRM measurement result.

As shown in FIG. 10, within a first PTW and a second PTW, measurement starts from a sampling point 1, and cell selection criterion evaluation is performed once after measurement is completed at a sampling point 2, to be specific, an RRM measurement result is output at the sampling point 2. Correspondingly, cell selection criterion evaluation is performed once after measurement is performed at a sampling point 3 and a sampling point 4, to be specific, an RRM measurement result is output at the sampling point 4; cell selection criterion evaluation is performed once after measurement is performed at a sampling point 5 and a sampling point 6, to be specific, an RRM measurement result is output at the sampling point 6; ...; and cell selection criterion evaluation is performed once after measurement is performed at a sampling point 19 and a sampling point 20, to be specific, an RRM measurement result is output at the sampling point 20.

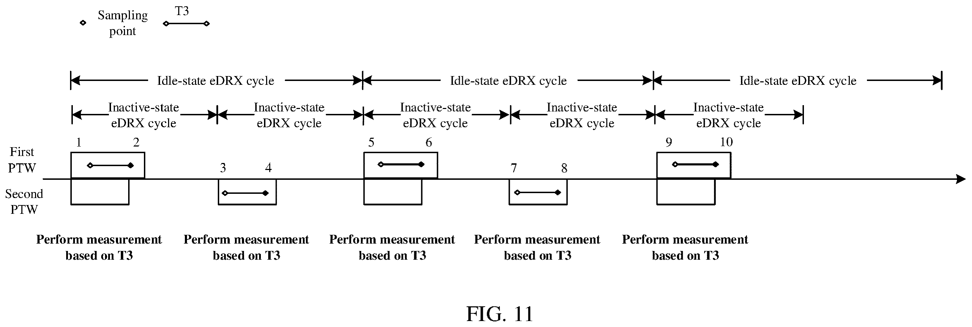

3. The first paging DRX cycle may include one of T1 and T2. For example, the first paging DRX cycle includes a smaller one between T1 and T2. For another example, the first paging DRX cycle includes a larger one between T1 and T2. To be specific, the terminal device may uniformly perform measurement by using a paging DRX cycle T3 without distinguishing whether the first PTW and the second PTW overlap, as shown in FIG. 11. T3 may be a value randomly selected from T1 and T2, or T3 may be a smaller one between T1 or T2 (T3=minimum(T1, T2)), or T3 may be a larger one between T1 or T2 (T3=maximum(T1, T2)).

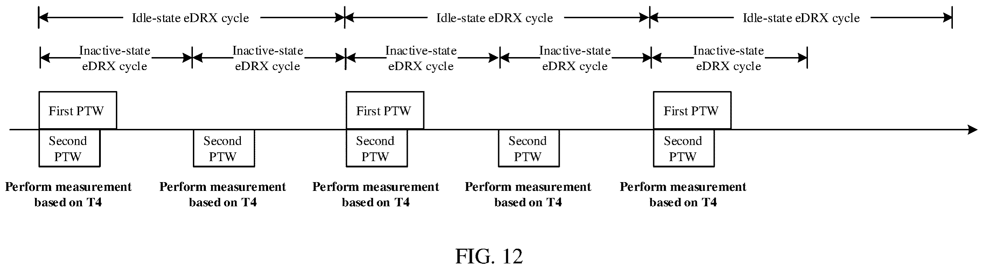

4. The first paging DRX cycle includes one of T1, T2-1, and T2-2. For example, the first paging DRX cycle includes a smallest one of T1, T2-1, and T2-2. For another example, the first paging DRX cycle includes a largest one of T1, T2-1, and T2-2. To be specific, the terminal device may uniformly perform measurement by using a paging DRX cycle T4 without distinguishing whether the first PTW and the second PTW overlap, as shown in FIG. 12. T4 may be a value randomly selected from T1, T-1, and T2-2, or T4 may be a smallest one of T1, T2-1, T2-2 (T4=minimum(T1, T2-1, T2-2)), or T4 may be a largest one of T1, T2-1, and T2-2 (T4=maximum(T1, T2-1, T2-2)).

It should be understood that, for a correspondence between the quantity R1 of paging DRX cycles and the first parameter set, reference may be made to the following Table 3. To be specific, the quantity R1 of paging DRX cycles is determined based on the first parameter set and Table 3. For example, when a length range of the idle-state eDRX cycle meets a condition of 20.48≤eDRX_idle cycle length≤10485.76, a length range of the inactive-state eDRX cycle meets a condition of 20.48≤eDRX_inactive cycle length≤10485.76, T3/T4=0.32s, a length of the first PTW is 1.28s, a length of the second PTW is 1.28s, and a scaling factor is 1, the quantity R1 of paging DRX cycles is equal to N1×M1×2.

Table 3

| Length of an idle-state eDRX cycle [s] | Length of an inactive-state eDRX cycle [s] | Paging DRX cycle T3/Paging DRX cycle T4 [s] | Length of a first PTW [s] (a multiple of 1.28s) | Length of a second PTW [s] (a multiple of 1.28s) | Scaling factor (N1) | R1 [a quantity of paging DRX cycles] |
|---|---|---|---|---|---|---|
| 20.48≤eDRX_ idle cycle length≤10485. 76 | 20.48≤eDRX_ inactive cycle length≤10485. 76 | 0.32 | ≥[1.28] (1) | ≥[1.28] (1) | 1 | N1×M1×2 |
| | | 0.64 | ≥1.28 (1) (M1=1) or ≥2.56 (2) (M1=2) | ≥1.28 (1) (M1=1) or ≥2.56 (2) (M1=2) | 1 | N1×M1×2 |
| | | 1.28 | ≥2.56 (2) | ≥2.56 (2) | 1 | N1×2 |
| | | 2.56 | ≥5.12 (4) | ≥5.12 (4) | 1 | N1×2 |

Note 1: The quantity of paging DRX cycles in this table is given based on the paging DRX cycle T3/T4 within overlapping PTWs and within non-overlapping PTWs.

Note 2: For the length of the idle-state eDRX cycle and the length of the inactive-state eDRX cycle, refer to the section 10.5.5.32 in TS 24.008.

Note 3: A lower bound of the length of the first PTW is derived based on

$$\left\lceil \frac{R1*DRX\_idle\ cycle}{1.28} \right\rceil * 1.28,$$

and a lower bound of the length of the second PTW is derived

$$\left\lceil \frac{R1*DRX\_inactive\ cycle}{1.28} \right\rceil * 1.28.$$

based on

Note 4: T3/T4 is one of T1, T2, T2-1, and T2-2.

Note 5: The paging DRX cycle T1 is determined according to a criterion 1, the paging DRX cycle T2 is determined according to a criterion 2, the paging DRX cycle T2-1 is determined according to a criterion 3, and the paging DRX cycle T2-2 is determined according to a criterion 4. For the criterion 1 to the criterion 4, refer to TS 38.304.

EP 4 661 512 A1

Optionally, the note 1 in Table 3 may alternatively be described as follows: "The quantity of paging DRX cycles in this table is given based on the paging DRX cycle T3/T4 within an idle-state PTW (that is, the first PTW) and within an inactive-state PTW (that is, the second PTW)."

For example, the following assumption is made: It is learned, based on Table 3, that the quantity R1 of paging DRX cycles corresponding to the first parameter set is 2. To be specific, during measurement on the serving cell, cell selection criterion (namely, s criterion) evaluation is performed once after measurement is continuously performed in two paging DRX cycles. To be specific, every two paging DRX cycles correspond to one RRM measurement result.

As shown in FIG. 11, within a first PTW and a second PTW, measurement starts from a sampling point 1, and cell selection criterion evaluation is performed once after measurement is completed at a sampling point 2, to be specific, an RRM measurement result is output at the sampling point 2. Correspondingly, cell selection criterion evaluation is performed once after measurement is performed at a sampling point 3 and a sampling point 4, to be specific, an RRM measurement result is output at the sampling point 4; ...; and cell selection criterion evaluation is performed once after measurement is performed at a sampling point 9 and a sampling point 10, to be specific, an RRM measurement result is output at the sampling point 10.

(2) If the RRM measurement on the serving cell is performed, the terminal device may alternatively perform measurement based on the second parameter set. In a possible example, the terminal device performs measurement within the PTW corresponding to the first eDRX cycle, and does not perform measurement out of the PTW. Herein, the first eDRX cycle is one of the idle-state eDRX cycle or the inactive-state eDRX cycle. To be specific, the terminal device performs measurement within the first PTW or the second PTW. For example, the first eDRX cycle may be a larger one between the idle-state eDRX cycle and the inactive-state eDRX cycle. Herein, the larger eDRX cycle may be the idle-state eDRX cycle. To be specific, the terminal device performs measurement within the first PTW. For another example, the first eDRX cycle may be a smaller one between the idle-state eDRX cycle and the inactive-state eDRX cycle. Herein, the smaller eDRX cycle may be the inactive-state eDRX cycle. To be specific, the terminal device performs measurement within the second PTW. Optionally, the first eDRX cycle may alternatively be the inactive-state eDRX cycle by default. To be specific, the first eDRX cycle is specified in a protocol, configured, or preconfigured to be the inactive-state eDRX cycle. Therefore, the terminal device performs measurement within the second PTW. The second paging cycle in the second parameter set includes the following four cases.

1. The second paging DRX cycle includes a paging DRX cycle T1 corresponding to a first PTW and a second PTW that do not overlap, and a paging DRX cycle T2 corresponding to a first PTW and a second PTW that overlap.
2. The second paging DRX cycle includes one of T1 and T2. To be specific, the second paging DRX cycle is a unified value. For example, the value may be randomly selected from T1 and T2, or the value is a smaller one between T1 and T2, or the value is a larger one between T1 and T2.
3. The second paging DRX cycle includes T1, a paging DRX cycle T2-1 corresponding to an overlapping part of a first PTW and a second PTW that overlap, and a paging DRX cycle T2-2 corresponding to a non-overlapping part of the first PTW and the second PTW that overlap.
4. The second paging DRX cycle includes one of T1, T2-1, and T2-2. To be specific, the second paging DRX cycle is a unified value. For example, the value may be randomly selected from T1, T2-1, and T2-2, or the value is a smallest one of T1, T2-1, and T2-2, or the value is a largest one of T1, T2-1, and T2-2.

For example, it is assumed that the first eDRX cycle in the second parameter set is the idle-state eDRX cycle and the second paging DRX cycle is T2, to be specific, the terminal device performs measurement based on T2 within the first PTW. In this case, for a correspondence between the quantity R1 of paging DRX cycles and the second parameter set, refer to the following Table 4.

Table 4

| Length of an idle-state eDRX cycle [s] | Length of an inactive-state eDRX cycle [s] | Paging DRX cycle T2 [s] | Length of a first PTW [s] (a multiple of 1.28s) | Scaling factor (N1) | R1 [a quantity of paging DRX cycles] |
|---|---|---|---|---|---|
| 20.48≤eDRX_idle cycle length≤10485.76 | 20.48≤eDRX_inactive cycle length≤10485.76 | 0.32 | ≥[1.28] (1) | 1 | N1×M1×2 |
| | | 0.64 | ≥1.28 (1) (M1=1) or ≥2.56 (2) (M1=2) | 1 | N1×M1×2 |
| | | 1.28 | ≥2.56 (2) | 1 | N1×2 |
| | | 2.56 | ≥5.12 (4) | 1 | N1×2 |

Note 1: The quantity of paging DRX cycles in this table is given based on the paging DRX cycle T2 within an idle-state PTW (that is, the first PTW).

Note 2: For the length of the idle-state eDRX cycle and the length of the inactive-state eDRX cycle, refer to the section 10.5.5.32 in TS 24.008.

Note 3: A lower bound of the length of the first PTW is derived based on

$$\left\lceil \frac{R1*DRX\_idle\ cycle}{1.28} \right\rceil * 1.28.$$

Note 4: The paging DRX cycle T2 is determined according to a criterion 2. For the criterion 2, refer to TS 38.304.

For another example, it is assumed that the first eDRX cycle in the second parameter set is the inactive-state eDRX cycle and the second paging DRX cycle is T1, to be specific, the terminal device performs measurement based on T1 within the second PTW. In this case, for a correspondence between the quantity R1 of paging DRX cycles and the second parameter set, refer to the following Table 5.

Table 5

| Length of an idle-state eDRX cycle [s] | Length of an inactive-state eDRX cycle [s] | Paging DRX cycle T1 [s] | Length of a second PTW [s] (a multiple of 1.28s) | Scaling factor (N1) | R1 [a quantity of paging DRX cycles] |
|---|---|---|---|---|---|
| 20.48≤eDRX_idle cycle length≤10485.76 | 20.48≤eDRX_inactive cycle length≤10485.76 | 0.32 | ≥[1.28] (1) | 1 | N1×M1×2 |
| | | 0.64 | ≥1.28 (1) (M1=1) or ≥2.56 (2) (M1=2) | 1 | N1×M1×2 |
| | | 1.28 | ≥2.56 (2) | 1 | N1×2 |
| | | 2.56 | ≥5.12 (4) | 1 | N1×2 |

Note 1: The quantity of paging DRX cycles in this table is given based on the paging DRX cycle T1 within an inactive-state PTW (that is, the second PTW).

Note 2: For the length of the idle-state eDRX cycle and the length of the inactive-state eDRX cycle, refer to the section 10.5.5.32 in TS 24.008.

Note 3: A lower bound of the length of the second PTW is derived based on

$$\left\lceil \frac{R1*DRX\_inactive\ cycle}{1.28} \right\rceil * 1.28.$$

Note 4: The paging DRX cycle T1 is determined according to a criterion 1. For the criterion 1, refer to TS 38.304.

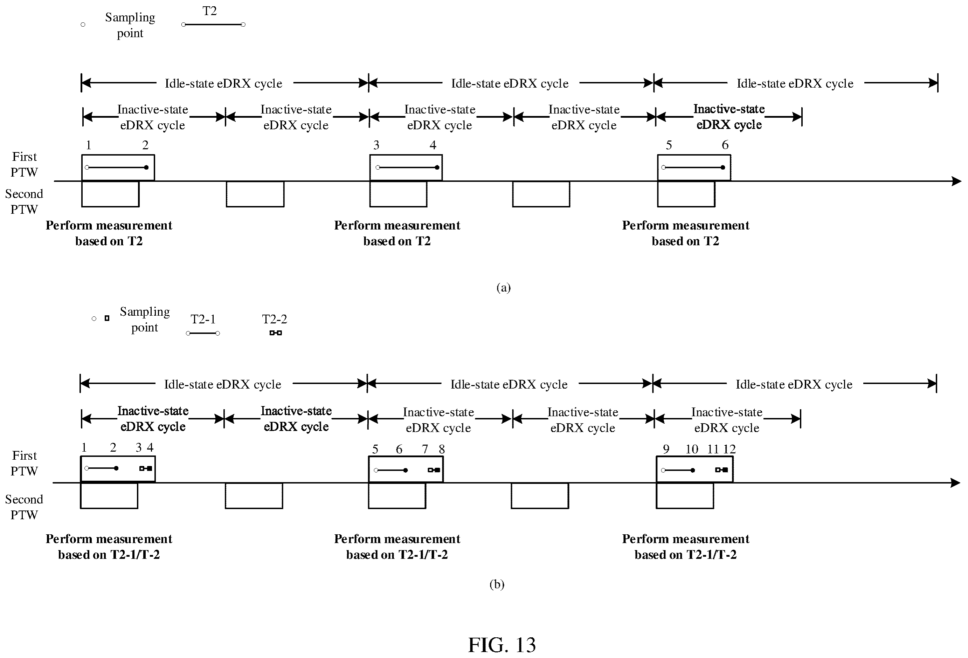

For example, as shown in (a) and (b) in FIG. 13, assuming that the terminal device performs measurement within a first PTW, the terminal device may perform measurement within the first PTW based on T2, or perform measurement within the first PTW based on T2-1/T2-2. Performing measurement within the first PTW based on T2-1/T2-2 may be understood as performing measurement within an overlapping part of the first PTW by using T2-1, and performing measurement within a non-overlapping part by using T2-2.

For example, the following assumption is made: It is determined, based on the correspondence between the second parameter set and the quantity R2 of paging DRX cycles, that the quantity R2 of paging DRX cycles corresponding to the second parameter set is 2. As shown in (a) in FIG. 13, it is assumed that the terminal device performs measurement within the first PTW based on T2. The measurement starts from a sampling point 1, and cell selection criterion evaluation is performed once after measurement is completed at a sampling point 2, to be specific, an RRM measurement result is output at the sampling point 2. Correspondingly, cell selection criterion evaluation is performed once after measurement is performed at a sampling point 3 and a sampling point 4, to be specific, an RRM measurement result is output at the sampling point 4; and cell selection criterion evaluation is performed once after measurement is performed at a sampling point 5 and a sampling point 6, to be specific, an RRM measurement result is output at the sampling point 6. As shown in (b) in FIG. 13, it is assumed that the terminal device performs measurement within the first PTW based on T2-1/T2-2. The measurement starts from a sampling point 1, and cell selection criterion evaluation is performed once after measurement is completed at a sampling point 2, to be specific, an RRM measurement result is output at the sampling point 2. Correspondingly, cell selection criterion evaluation is performed once after measurement is performed at a sampling point 3 and a sampling point 4, to be specific, an RRM measurement result is output at the sampling point 4; ...; and cell selection criterion evaluation is performed once after measurement is performed at a sampling point 11 and a sampling point 12, to be specific, an RRM measurement result is output at the sampling point 12.

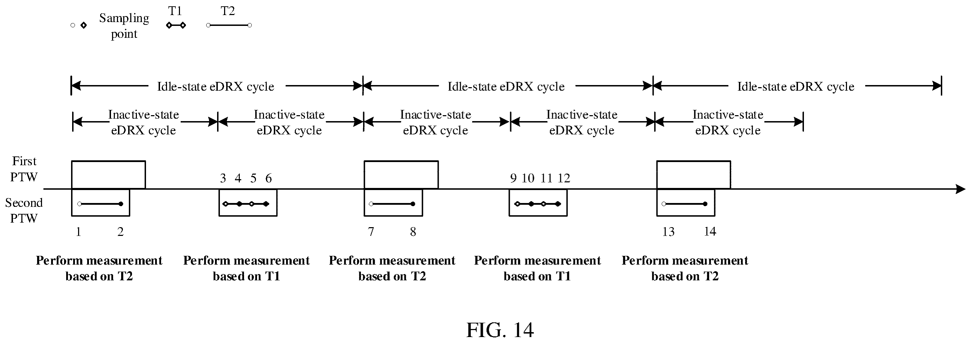

For another example, it is also assumed that the quantity R2 of paging DRX cycles is 2. As shown in FIG. 14, assuming that the terminal device performs measurement within a second PTW, the terminal device may perform measurement based on T2 within a second PTW that overlaps a first PTW, and perform measurement based on T1 within a second PTW that does not overlap a first PTW. As shown in FIG. 14, measurement starts from a sampling point 1, and cell selection criterion evaluation is performed once after measurement is completed at a sampling point 2, to be specific, an RRM measurement result is output at the sampling point 2. Correspondingly, cell selection criterion evaluation is performed once after measurement is performed at a sampling point 3 and a sampling point 4, to be specific, an RRM measurement result is output at the sampling point 4; ...; and cell selection criterion evaluation is performed once after measurement is performed at a sampling point 13 and a sampling point 14, to be specific, an RRM measurement result is output at the sampling point 14.

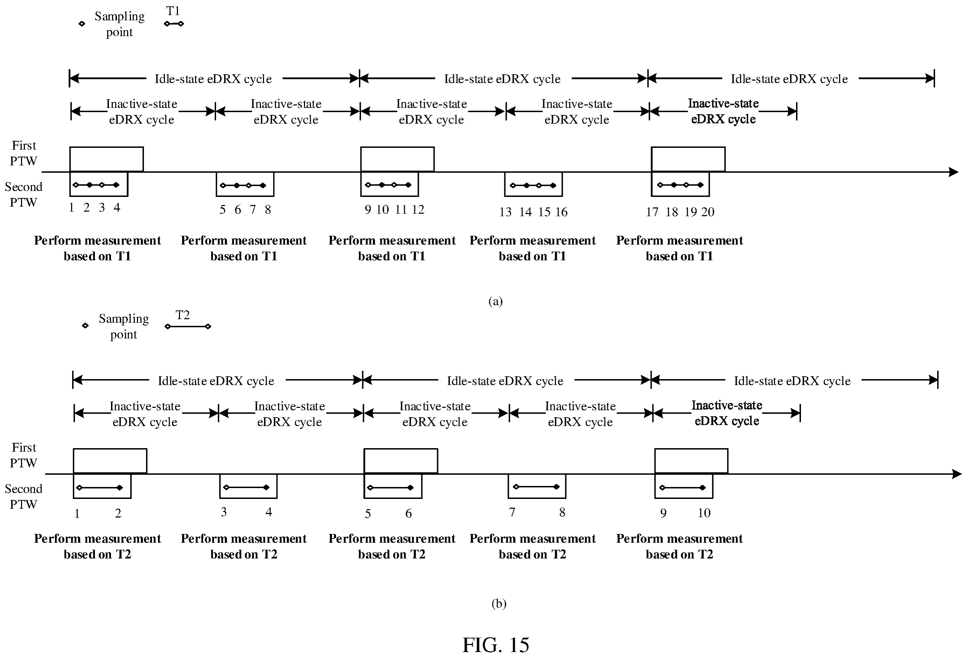

For still another example, it is also assumed that the quantity R2 of paging DRX cycles is 2. As shown in (a) and (b) in FIG. 15, assuming that the terminal device performs measurement within a second PTW, the terminal device may perform measurement within the second PTW based on T1, or perform measurement within the second PTW based on T2. As shown in (a) in FIG. 15, it is assumed that the terminal device performs measurement within the second PTW based on T1. The measurement starts from a sampling point 1, and cell selection criterion evaluation is performed once after measurement is completed at a sampling point 2, to be specific, an RRM measurement result is output at the sampling point 2. Correspondingly, cell selection criterion evaluation is performed once after measurement is performed at a sampling point 3 and a sampling point 4, to be specific, an RRM measurement result is output at the sampling point 4; ...; and cell selection criterion evaluation is performed once after measurement is performed at a sampling point 19 and a sampling point 20, to be specific, an RRM measurement result is output at the sampling point 20. As shown in (b) in FIG. 15, it is assumed that the terminal device performs measurement within the second PTW based on T2. The measurement starts from a sampling point 1, and cell selection criterion evaluation is performed once after measurement is completed at a sampling point 2, to be specific, an RRM measurement result is output at the sampling point 2. Correspondingly, cell selection criterion evaluation is performed once after measurement is performed at a sampling point 3 and a sampling point 4, to be specific, an RRM measurement result is output at the sampling point 4; ...; and cell selection criterion evaluation is performed once after measurement is performed at a sampling point 9 and a sampling point 10, to be specific, an RRM measurement result is output at the sampling point 10.

(3) If the intra-frequency or inter-frequency RRM measurement is performed, the terminal device may perform measurement based on the second parameter set. In a possible example, the terminal device performs measurement within the PTW corresponding to the first eDRX cycle, and does not perform measurement out of the PTW. Herein, the first eDRX cycle is one of the idle-state eDRX cycle or the inactive-state eDRX cycle. To be specific, the terminal device performs measurement within the first PTW or the second PTW. For a selection rule for the first eDRX cycle, refer to the foregoing related part. Details are not described herein again. The second paging cycle in the second parameter set includes the following four cases.

1. The second paging DRX cycle may include one of T1 and T2. For example, the second paging DRX cycle includes a smaller one between T1 and T2. For another example, the second paging DRX cycle includes a larger one between T1 and T2.

2. The second paging DRX cycle may include one of T1, T2-1, and T2-2. For example, the second paging DRX cycle includes a smallest one of T1, T2-1, and T2-2. For another example, the second paging DRX cycle includes a largest one of T1, T2-1, and T2-2. For another example, the second paging DRX cycle includes a smaller one between T2-1 and T2-2. For another example, the second paging DRX cycle includes a larger one between T2-1 and T2-2.

3. The second paging DRX cycle may alternatively be T1 by default. To be specific, the second paging DRX cycle is specified in a protocol, configured, or preconfigured to be T1.

4. The second paging DRX cycle may alternatively be T2 by default. To be specific, the second paging DRX cycle is specified in a protocol, configured, or preconfigured to be T2.

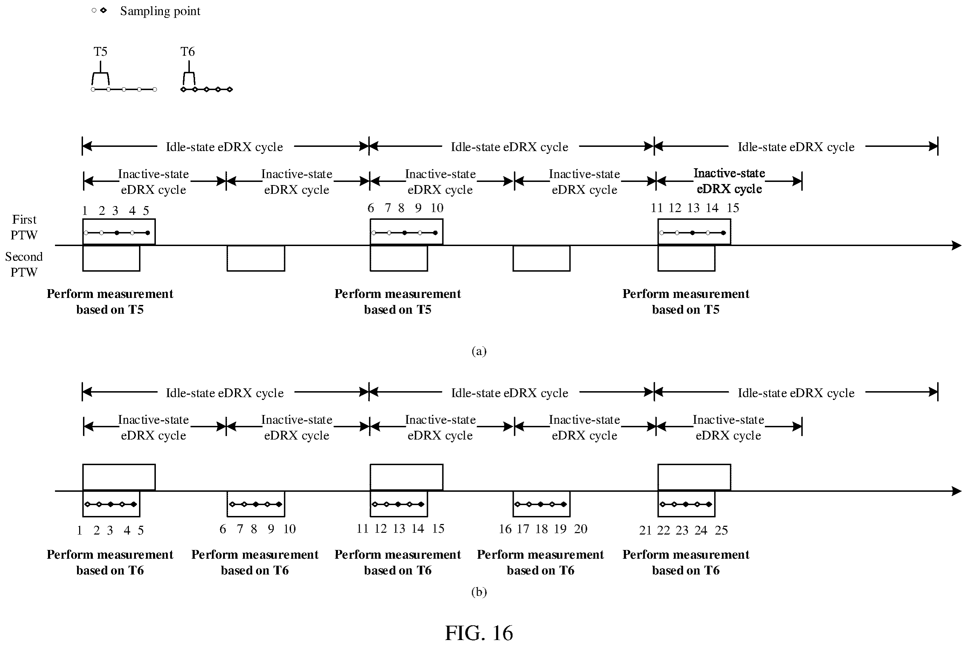

To be specific, the terminal device may perform measurement within the first PTW uniformly by using a paging DRX cycle T5, or the terminal device may perform measurement within the second PTW uniformly by using a paging DRX cycle T6. For example, as shown in (a) in FIG. 16, within a first PTW, the terminal device may perform measurement uniformly by using a paging DRX cycle T5. For another example, as shown in (b) in FIG. 16, within a second PTW, the terminal device may perform measurement uniformly by using a paging DRX cycle T6. For example, T5/T6 may be a value randomly selected from T1 and T2, or T5/T6=minimum(T1, T2), or T5/T6=maximum(T1, T2), or T5/T6=minimum(T1, T2-1, T2-2), or T5/T6=maximum(T1, T2-1, T2-2), or T5/T6=minimum(T2-1, T2-2), or T5/T6=maximum(T2-1, T2-2), or T5/T6=T1, or T5/T6=T2.

It should be understood that, for a correspondence between the first duration and the second parameter set, reference may be made to the following Table 6 and Table 7.

As shown in Table 6, the first eDRX cycle in the second parameter set is the idle-state eDRX cycle, the second paging DRX cycle is T5, and the PTW corresponding to the first eDRX cycle is the first PTW. To be specific, the first duration is determined based on the second parameter set and Table 6. For example, when a length range of the idle-state eDRX cycle meets a condition of $20.48 \leq eDRX\_idle$ cycle length$\leq 10485.76$, T5=0.32s, and a length of the first PTW is 1.28s,

$$T_{detect,NR\_Intra} = eDRX\_idle \text{ cycle length} \times \left\lceil \frac{23}{\text{First PTW/T5}} \right\rceil$$

, $T_{measure,NR\_Intra}=0.32 \times M2$, and $T_{evaluate,NR\_Intra}=0.64 \times M2$. M2 represents a conditional coefficient. For example, when an SMTC cycle is greater than 20 ms, M2 is 1.5; otherwise, M2 is 1. M2 is merely an example, and whether M2 exists and a value of M2 may vary. It should be understood that a meaning of M2 appearing in the following tables is the same as the meaning of M2 in Table 7, and details are not described again subsequently.

As shown in Table 7, the first eDRX cycle in the second parameter set is the inactive-state eDRX cycle, the second paging DRX cycle is T6, and the PTW corresponding to the first eDRX cycle is the second PTW. To be specific, the first duration is determined based on the second parameter set and Table 7. For example, when a length range of the inactive-state eDRX cycle meets a condition of $20.48 \leq eDRX\_idle$ cycle length$\leq 10485.76$, T6=0.32s, and a length of the second PTW is 1.28s, $T_{detect,NR\_Intra} = eDRX\_idle \text{ cycle length} \times \left\lceil \frac{23}{\text{First PTW/T6}} \right\rceil$ , $T_{measure,NR\_Intra}=0.32 \times M2$, and $T_{evaluate,NR\_Intra}=0.64 \times M2$. For M2, refer to the understanding of M2 in Table 7. Details are not described herein again.

It should be noted that all of $T_{detect,NR\_Intra}$, $T_{measure,NR\_Intra}$, and $T_{evaluate,NR\_Intra}$ may be understood as the first duration. Specifically, when the RRM measurement performed by the terminal device is cell identification, the first duration is $T_{detect,NR\_Intra}$. When the RRM measurement performed by the terminal device is cell measurement, the first duration is $T_{measure,NR\_Intra}$. When the RRM measurement performed by the terminal device is reselection criterion evaluation, the first duration is $T_{evaluate,NR\_Intra}$.

Table 6

| Length of an idle-state eDRX cycle [s] | Length of an inactive-state eDRX cycle [s] | Paging DRX cycle T5 [s] | Length of a first PTW [s] (a multiple of 1.28s) | $T_{detect,NR\_Intra}$ [s] (a quantity of paging DRX cycles T5) | $T_{measure,NR\_Intra}$ [s] (a quantity of paging DRX cycles T5) | $T_{evaluate,NR\_Intra}$ [s] (a quantity of paging DRX cycles T5) |
|---|---|---|---|---|---|---|
| $20.48 \leq eDRX\_idle\ cycle\ length \leq 10485.76$ | $20.48 \leq e\ DRX\_in\ active\ cycle\ length \leq 10485.76$ | 0.32 | $\geq[1.28]$ ([1]) | $eDRX\_idle\ cycle\ length \times \left\lceil \dfrac{23}{First\ PTW/T5} \right\rceil$ (23) | $0.32 \times M2$ ($1 \times M2$) | $0.64 \times M2$ ($2 \times M2$) |
| | | 0.64 | $\geq[1.28]$ ([1]) | | 0.64 (1) | 1.28 (2) |
| | | 1.28 | $\geq[2.56]$ ([2]) | | 1.28 (1) | 2.56 (2) |
| | | 2.56 | $\geq[5.12]$ ([4]) | | 2.56 (1) | 5.12 (2) |

Note 1: The quantity of paging DRX cycles T5 in this table is given based on the paging DRX cycle T5 within an idle-state PTW (that is, the first PTW).

Note 2: For the length of the idle-state eDRX cycle and the length of the inactive-state eDRX cycle, refer to the section 10.5.5.32 in TS 24.008.

Note 3: A lower bound of the length of the first PTW is derived based on

$$\left\lceil \frac{Tevaluate,NR\_Intra*T5}{1.28} \right\rceil * 1.28.$$

Note 4: The paging DRX cycle T5 is one of T1, T2, T2-1, and T2-2.

Note 5: The paging DRX cycle T1 is determined according to a criterion 1, the paging DRX cycle T2 is determined according to a criterion 2, the paging DRX cycle T2-1 is determined according to a criterion 3, and the paging DRX cycle T2-2 is determined according to a criterion 4. For the criteria 1 to 4, refer to TS 38.304.

Note 6: When an SMTC cycle is greater than 20 ms, M1 is 1.5; otherwise, M1 is 1.

EP 4 661 512 A1

For example, it is assumed that the first duration is $T_{measure,NR\_Intra}$, to be specific, the intra-frequency or inter-frequency RRM measurement is cell measurement. The following assumption is made: It is determined, based on the correspondence in Table 6, that $T_{measure,NR\_Intra}$ corresponding to the second parameter set is $(2 \times T5)$s. To be specific, cell measurement is performed every $(2 \times T5)$s. As shown in (a) in FIG. 16, if a sampling point 1 is used as a start point of timing, measurement results of cell measurement may be respectively output at sampling points 3, 5, 8, 10, 13, and 15.

Table 7

| Length of an idle-state eDRX cycle [s] | Length of an inactive-state eDRX cycle [s] | Paging DRX cycle T6 [s] | Length of a second PTW [s] (a multiple of 1.28s) | $T_{detect,NR\_Intra}$ [s] (a quantity of paging DRX cycles T6) | $T_{measure,NR\_Intra}$ [s] (a quantity of paging DRX cycles T6) | $T_{evaluate,NR\_Intra}$ [s] (a quantity of paging DRX cycles T6) |
|---|---|---|---|---|---|---|
| $20.48 \leq$ eDRX_idl e cycle length $\leq 1$ 0485.76 | $20.48 \leq$ eD RX_idle cy-cle length $\leq 10$ 485.76 | 0.32 | $\geq$[1.28] ([1]) | eDRX_inactive cycle length $\times \left\lceil \dfrac{23}{\text{Second PTW/T6}} \right\rceil$ (23) | 0.32×M2 (1×M2) | 0.64×M2 (2×M2) |
| | | 0.64 | $\geq$[1.28] ([1]) | | 0.64 (1) | 1.28 (2) |
| | | 1.28 | $\geq$[2.56] ([2]) | | 1.28 (1) | 2.56 (2) |
| | | 2.56 | $\geq$[5.12] ([4]) | | 2.56 (1) | 5.12 (2) |

Note 1: The quantity of paging DRX cycles T6 in this table is given based on the paging DRX cycle T6 within an inactive-state PTW (that is, the second PTW).

Note 2: For the length of the idle-state eDRX cycle and the length of the inactive-state eDRX cycle, refer to the section 10.5.5.32 in TS 24.008.

Note 3: A lower bound of the length of the second PTW is derived based on

$$\left\lceil \frac{\text{Tevaluate,NR\_Intra} * \text{T6}}{1.28} \right\rceil * 1.28.$$

Note 4: The paging DRX cycle T6 is one of T1, T2, T2-1, and T2-2.

Note 5: The paging DRX cycle T1 is determined according to a criterion 1, the paging DRX cycle T2 is determined according to a criterion 2, the paging DRX cycle T2-1 is determined according to a criterion 3, and the paging DRX cycle T2-2 is determined according to a criterion 4. For the criteria 1 to 4, refer to TS 38.304.

Note 6: When an SMTC cycle is greater than 20 ms, M1 is 1.5; otherwise, M1 is 1.

For example, it is assumed that the first duration is $T_{measure,NR\_Intra}$, to be specific, the intra-frequency or inter-frequency RRM measurement is cell measurement. The following assumption is made: It is determined, based on the correspondence in Table 7, that $T_{measure,NR\_Intra}$ corresponding to the second parameter set is $(2 \times T6)$s. To be specific, cell measurement is performed every $(2 \times T6)$s. As shown in (a) in FIG. 16, if a sampling point 1 is used as a start point of timing, measurement results of cell measurement may be respectively output at sampling points 3, 5, 8, 10, 13, 15, 18, 20, 23, and 25.

II. In the case 2 (there is not any pair of a first PTW and a second PTW that overlap):

(1) If the RRM measurement on the serving cell is performed, the terminal device may perform measurement based on the first parameter set. In a possible example, the terminal device performs measurement within the first PTW and the second PTW, and does not perform measurement out of the first PTW or the second PTW. The first paging DRX cycle in the first parameter set includes an idle-state paging DRX cycle and an inactive-state paging DRX cycle. For a correspondence between the quantity R1 of paging DRX cycles and the first parameter set, refer to the following Table 8. To be specific, the quantity R1 of paging DRX cycles may be determined based on the first parameter set and Table 8. For example, when a length range of the idle-state eDRX cycle meets a condition of $20.48 \le$ eDRX_idle cycle length $\le 10485.76$, a length range of the inactive-state eDRX cycle meets a condition of $20.48 \le$ eDRX_inactive cycle length $\le 10485.76$, the idle-state paging DRX cycle is 0.32s, the inactive-state paging DRX cycle is 0.32s, a length of the first PTW is 1.28s, a length of the second PTW is 1.28s, and a scaling factor is 1, the quantity R1 of paging DRX cycles is equal to $N1 \times M1 \times 2$.

Table 8

| Length of an idle-state eDRX cycle [s] | Length of an inactive-state eDRX cycle [s] | Idle-state paging DRX cycle [s] | Inactive-state paging DRX cycle [s] | Length of a first PTW [s] (a multiple of 1.28s) | Length of a second PTW [s] (a multiple of 1.28s) | Scaling factor (N1) | R1 [a quantity of paging DRX cycles] |
|---|---|---|---|---|---|---|---|
| 20.48≤eDRX_ idle cycle length≤10485. 76 | 20.48≤eDRX_ inactive cycle length≤10485. 76 | 0.32 | 0.32 | ≥[1.28] (1) | ≥[1.28] (1) | 1 | N1×M1× 2 |
| | | 0.64 | 0.64 | ≥1.28 (1) (M1=1) or ≥2.56 | ≥1.28 (1) (M1=1) or ≥2.56 (2) | 1 | N1×M1× 2 |
| | | | | (2) (M1=2) | (M1=2) | | |
| | | 1.28 | 1.28 | ≥2.56 (2) | ≥2.56 (2) | 1 | N1×2 |
| | | 2.56 | 2.56 | ≥5.12 (4) | ≥5.12 (4) | 1 | N1×2 |

Note 1: The quantity of paging DRX cycles in this table is given based on the idle-state paging DRX cycle within an idle-state PTW (that is, the first PTW) and based on the inactive-state paging DRX cycle within an inactive-state PTW (that is, the second PTW).

Note 2: For the length of the idle-state eDRX cycle and the length of the inactive-state eDRX cycle, refer to the section 10.5.5.32 in TS 24.008.

$$\left\lceil \frac{R1*DRX\_idle\ cycle}{1.28} \right\rceil * 1.28,$$

Note 4: A lower bound of the length of the first PTW is derived based on and a lower bound of the length of the second PTW is derived

$$\left\lceil \frac{R1*DRX\_inactive\ cycle}{1.28} \right\rceil * 1.28.$$

based on

Note 5: The idle-state paging DRX cycle is determined according to a criterion 5, and the inactive-state paging DRX cycle is determined according to a criterion 6. For the criterion 5 and the criterion 6, refer to TS 38.304.

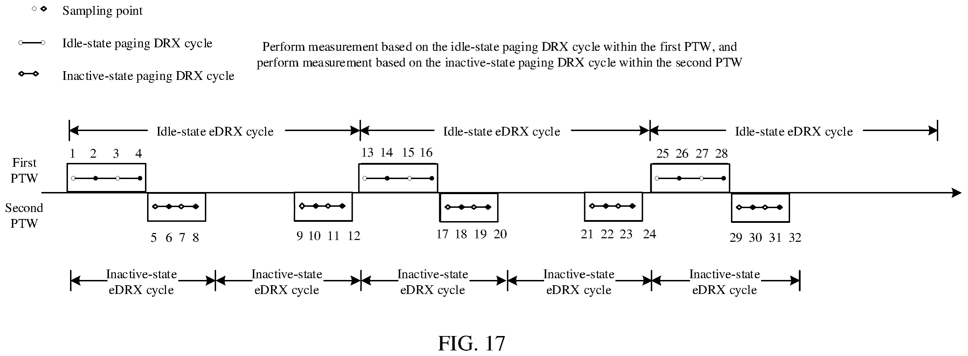

For example, the following assumption is made: It is learned, based on Table 8, that the quantity R1 of paging DRX cycles corresponding to the first parameter set is 2. As shown in FIG. 17, within a first PTW and a second PTW, it is assumed that measurement starts from a sampling point 1. In this case, RRM measurement results may be respectively output at sampling points 2, 4, 6, 8, ..., and 32.

(2) If the RRM measurement on the serving cell is performed, the terminal device may alternatively perform measurement based on the second parameter set. In a possible example, the terminal device performs measurement within the PTW corresponding to the first eDRX cycle, and does not perform measurement out of the PTW. Herein, the first eDRX cycle is one of the idle-state eDRX cycle or the inactive-state eDRX cycle. To be specific, the terminal device performs measurement within the first PTW or the second PTW. For a selection rule for the first eDRX cycle, refer to the foregoing related part. Details are not described herein again.

It should be understood that the second paging DRX cycle is a paging DRX cycle corresponding to the first eDRX cycle. For example, when the first eDRX cycle is the idle-state eDRX cycle, the paging DRX cycle corresponding to the first eDRX cycle is the idle-state paging DRX cycle, and the PTW corresponding to the first eDRX cycle is the first PTW. For another example, when the first eDRX cycle is the inactive-state eDRX cycle, the paging DRX cycle corresponding to the first eDRX cycle is the inactive-state paging DRX cycle, and the PTW corresponding to the first eDRX cycle is the second PTW.

It should be understood that, for a correspondence between a quantity R2 of (idle-state) paging DRX cycles and the second parameter set, reference may be made to the following Table 9; and for a correspondence between a quantity R2 of (inactive-state) paging DRX cycles and the second parameter set, reference may be made to the following Table 10. As shown in Table 9, the first eDRX cycle in the second parameter set is the idle-state eDRX cycle, the second paging DRX cycle is the idle-state paging DRX cycle, and the PTW corresponding to the first eDRX cycle is the first PTW. To be specific, the first duration is determined based on the second parameter set and Table 9. For example, when a length range of the idle-state eDRX cycle meets a condition of 20.48≤eDRX_idle cycle length≤10485.76, the idle-state paging DRX cycle is 0.32s, a length of the first PTW is 1.28s, and a scaling factor is 1, the quantity R1 of paging DRX cycles is equal to N1×M1×2.

As shown in Table 10, the first eDRX cycle in the second parameter set is the inactive-state eDRX cycle, the second paging DRX cycle is the inactive-state paging DRX cycle, and the PTW corresponding to the first eDRX cycle is the second PTW. To be specific, the first duration is determined based on the second parameter set and Table 10. For example, when a length range of the inactive-state eDRX cycle meets a condition of 20.48≤eDRX_idle cycle length≤10485.76, the inactive-state paging DRX cycle is 0.32s, a length of the second PTW is 1.28s, and a scaling factor is 1, the quantity R1 of paging DRX cycles is equal to N1×M1×2.

Table 9

| Length of an idle-state eDRX cycle [s] | Length of an inactive-state eDRX cycle [s] | Idle-state paging DRX cycle [s] | Length of a first PTW [s] (a multiple of 1.28s) | Scaling factor (N1) | R2 [a quantity of idle-state paging DRX cycles] |
|---|---|---|---|---|---|
| 20.48≤eDRX_idle cycle length≤10485.76 | 20.48≤eDRX_inactive cycle length≤10485.76 | 0.32 | ≥[1.28] (1) | 1 | N1×M1×2 |
| | | 0.64 | ≥1.28 (1) (M1=1) or | 1 | N1×M1×2 |
| | | | ≥2.56 (2) (M1=2) | | |
| | | 1.28 | ≥2.56 (2) | 1 | N1×2 |
| | | 2.56 | ≥5.12 (4) | 1 | N1×2 |

Note 1: The quantity of idle-state paging DRX cycles in this table is given based on the idle-state paging DRX cycle within an idle-state PTW (that is, the first PTW).

Note 2: For the length of the idle-state eDRX cycle and the inactive-state eDRX cycle, refer to the section 10.5.5.32 in TS 24.008.

Note 3: A lower bound of the length of the first PTW is derived based on

$$\left\lceil \frac{R2 * DRX\_idle\ cycle}{1.28} \right\rceil * 1.28.$$

Note 4: The idle-state paging DRX cycle is determined according to a criterion 5. For the criterion 5, refer to TS 38.304.

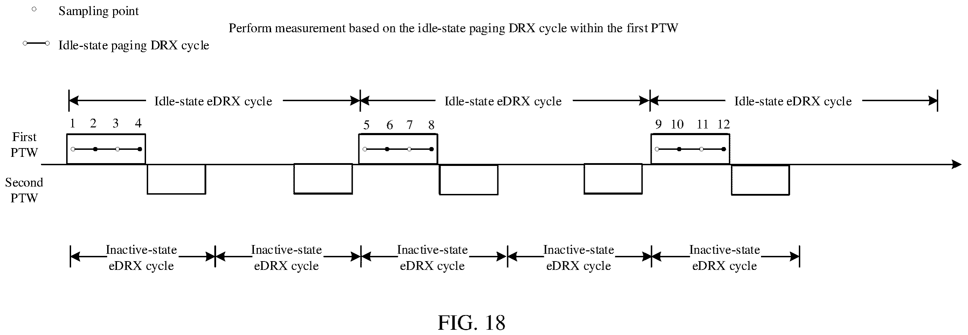

For example, the following assumption is made: It is learned, based on Table 9, that the quantity R2 of paging DRX cycles corresponding to the second parameter set is 2. As shown in FIG. 18, during measurement within a first PTW, it is assumed that the measurement starts from a sampling point 1. In this case, RRM measurement results may be respectively output at sampling points 2, 4, 6, 8, and 12.

Table 10

| Length of an idle-state eDRX cycle [s] | Length of an inactive-state eDRX cycle [s] | Inactive-state paging DRX cycle [s] | Length of a second PTW [s] (a multiple of 1.28s) | Scaling factor (N1) | R2 [a quantity of inactive-state paging DRX cycles] |
|---|---|---|---|---|---|
| 20.48≤eDRX_idle cycle length≤10485.76 | 20.48≤eDRX_inactive cycle length≤10485.76 | 0.32 | ≥[1.28] (1) | 1 | N1×M1×2 |
| | | 0.64 | ≥1.28 (1) (M1=1) or ≥2.56 (2) | 1 | N1×M1×2 |
| | | | (M1=2) | | |
| | | 1.28 | ≥2.56 (2) | 1 | N1×2 |
| | | 2.56 | ≥5.12 (4) | 1 | N1×2 |

Note 1: The quantity of inactive-state paging DRX cycles in this table is given based on the inactive-state paging DRX cycle within an inactive-state PTW (that is, the second PTW).

Note 2: For the length of the idle-state eDRX cycle and the length of the inactive-state eDRX cycle, refer to the section 10.5.5.32 in TS 24.008.

Note 3: A lower bound of the length of the second PTW is derived based on

$$\left\lceil \frac{R2*DRX\_inactive\ cycle}{1.28} \right\rceil * 1.28.$$

Note 4: The inactive-state paging DRX cycle is determined according to a criterion 6. For the criterion 6, refer to TS 38.304.

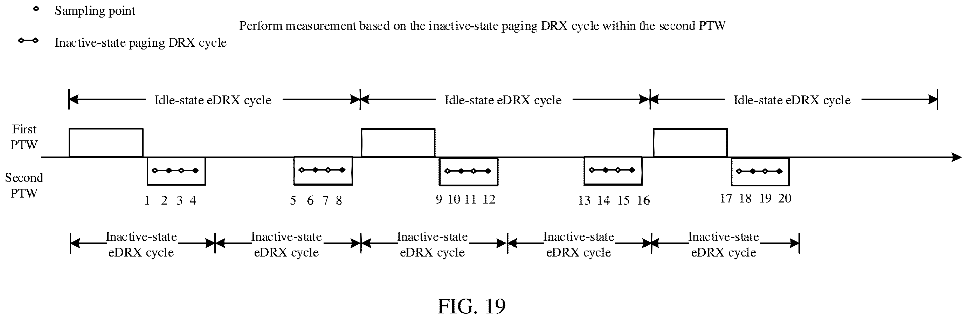

For example, the following assumption is made: It is learned, based on Table 10, that the quantity R2 of paging DRX cycles corresponding to the second parameter set is 2. As shown in FIG. 19, measurement is performed within a second PTW, and it is assumed that the measurement starts from a sampling point 1. In this case, RRM measurement results may be respectively output at sampling points 2, 4, 6, 8, ..., and 20.

(3) If the intra-frequency or inter-frequency RRM measurement is performed, the terminal device may perform measurement based on the second parameter set. In a possible example, the terminal device performs measurement within the PTW corresponding to the first eDRX cycle, and does not perform measurement out of the PTW. Herein, the first eDRX cycle is one of the idle-state eDRX cycle or the inactive-state eDRX cycle. To be specific, the terminal device performs measurement within the first PTW or the second PTW. For a selection rule for the first eDRX cycle, refer to the foregoing related part. Details are not described herein again.

It should be understood that the second paging DRX cycle is a paging DRX cycle corresponding to the first eDRX cycle. For example, when the first eDRX cycle is the idle-state eDRX cycle, the paging DRX cycle corresponding to the first eDRX cycle is the idle-state paging DRX cycle, and the PTW corresponding to the first eDRX cycle is the first PTW. For another example, when the first eDRX cycle is the inactive-state eDRX cycle, the paging DRX cycle corresponding to the first eDRX cycle is the inactive-state paging DRX cycle, and the PTW corresponding to the first eDRX cycle is the second PTW.

Based on this, for a correspondence between the first duration and the second parameter set, refer to the following Table 11 and Table 12. As shown in Table 11, the first eDRX cycle in the second parameter set is the idle-state eDRX cycle, the second paging DRX cycle is the idle-state paging DRX cycle, and the PTW corresponding to the first eDRX cycle is the first PTW. To be specific, the first duration is determined based on the second parameter set and Table 11. For example, when a length range of the idle-state eDRX cycle meets a condition of 20.48≤eDRX_idle cycle length≤10485.76, the idle-state paging DRX cycle is 0.32s, and a length of the first PTW is 1.28s,

$$T_{detect,NR\_Intra}= eDRX\_idle\ cycle\ length \times \left\lceil \frac{23}{First\ PTW/DRX\_idle\ cycle\ length} \right\rceil,\ T_{measure,NR\_Intra}=0.32 \times M2,\ \text{and}\ T_{evaluate,NR\_Intra}=0.64 \times M2.$$

As shown in Table 12, the first eDRX cycle in the second parameter set is the inactive-state eDRX cycle, the second paging DRX cycle is the inactive-state paging DRX cycle, and the PTW corresponding to the first eDRX cycle is the second PTW. To be specific, the first duration is determined based on the second parameter set and Table 12. For example, when a length range of the inactive-state eDRX cycle meets a condition of $20.48 \leq$ eDRX_inactive cycle length $\leq 10485.76$, the inactive-state paging DRX cycle is 0.32s, and a length of the second PTW is 1.28s,

$$T_{detect,NR\_Intra} = \text{eDRX\_inactive cycle length} \times \left\lceil \frac{23}{\text{Second PTW/DRX\_inactive cycle length}} \right\rceil , \quad T_{measure,NR\_Intra} = 0.32 \times M2, \text{ and } T_{evaluate,NR\_Intra} = 0.64 \times M2.$$

When the RRM measurement performed by the terminal device is cell identification, the first duration is $T_{detect,NR\_Intra}$. When the RRM measurement performed by the terminal device is cell measurement, the first duration is $T_{measure,NR\_Intra}$. When the RRM measurement performed by the terminal device is reselection criterion evaluation, the first duration is $T_{evaluate,NR\_Intra}$.

Table 11

| Length of an idle-state eDRX cycle [s] | Length of an inactive-state eDRX cycle [s] | Idle-state paging DRX cycle [s] | Length of a first PTW [s] (a multiple of 1.28s) | $T_{detect,NR\_Intra}$ [s] (a quantity of idle-state paging DRX cycles) | $T_{measure, NR\_Intra}$ [s] (a quantity of idle-state paging DRX cycles) | $T_{evaluate,N R\_Intra}$ [s] (a quantity of idle-state paging DRX cycles) |
|---|---|---|---|---|---|---|
| 20.48≤e DRX_idle cycle length≤10485.76 | 20.48≤e DRX_inactive cycle length≤10485.76 | 0.32 | ≥[1.28] ([1]) | $$\text{eDRX\_idle cycle length} \times \left\lceil \frac{23}{\text{First PTW/DRX\_idle cycle length}} \right\rceil \quad (23)$$ | 0.32×M 2 (1×M2) | 0.64×M 2 (2×M2) |
| | | 0.64 | ≥[1.28] ([1]) | | 0.64 (1) | 1.28 (2) |
| | | 1.28 | ≥[2.56] ([2]) | | 1.28 (1) | 2.56 (2) |
| | | 2.56 | ≥[5.12] ([4]) | | 2.56 (1) | 5.12 (2) |

Note 1: The quantity of idle-state paging DRX cycles in this table is given based on the idle-state paging DRX cycle within an idle-state PTW (that is, the first PTW).

Note 2: For the length of the idle-state eDRX cycle and the length of the inactive-state eDRX cycle, refer to the section 10.5.5.32 in TS 24.008.

Note 3: A lower bound of the length of the first PTW is derived based on

$$\left\lceil \frac{\text{Tevaluate,NR\_Intra} * \text{DRX\_idle cycle length}}{1.28} \right\rceil * 1.28.$$

Note 4: When an SMTC cycle is greater than 20 ms, M1 is 1.5; otherwise, M1 is 1.

Note 5: The idle-state paging DRX cycle is determined according to a criterion 5. For the criterion 5, refer to TS 38.304.

EP 4 661 512 A1

Table 12

| Length of an idle-state eDRX cycle [s] | Length of an inactive-state eDRX cycle [s] | Inacti ve-state pagin g DRX cycle [s] | Length of a second PTW [s] (a multipl e of 1.28s) | $T_{detect,NR\_Intra}$ [s] (a quantity of inactive-state paging DRX cycles) | $T_{measure,N R\_Intra}$ [s] (a quantity of inactive-state paging DRX cycles) | $T_{evaluate, NR\_Intra}$ [s] (a quantit y of inactiv e-state paging DRX cycles) |
|---|---|---|---|---|---|---|
| $20.48\leq$ eDRX_ idle cycle length$\leq$ 10485. 76 | $20.48\leq$ eDRX_ in-active cycle length$\leq$ 10485. 76 | 0.32 | $\geq$[1.28] ([1]) | $$\text{eDRX\_inactive cycle length} \times \left\lceil \frac{23}{\text{Second PTW/DRX\_inactive cycle length}} \right\rceil$$ (23) | 0.32×M 2 (1×M2) | 0.64× M2 (2×M2) |
| | | 0.64 | $\geq$[1.28] ([1]) | | 0.64 (1) | 1.28 (2) |
| | | 1.28 | $\geq$[2.56] ([2]) | | 1.28 (1) | 2.56 (2) |
| | | 2.56 | $\geq$[5.12] ([4]) | | 2.56 (1) | 5.12 (2) |

Note 1: The quantity of inactive-state paging DRX cycles in this table is given based on the inactive-state paging DRX cycle within an inactive-state PTW (that is, the second PTW).

Note 2: For the length of the idle-state eDRX cycle and the length of the inactive-state eDRX cycle, refer to the section 10.5.5.32 in TS 24.008.

Note 3: A lower bound of the length of the second PTW is derived based on

$$\left\lceil \frac{\text{Tevaluate,NR\_Intra} * \text{DRX\_inactive cycle length}}{1.28} \right\rceil * 1.28.$$

Note 4: When an SMTC cycle is greater than 20 ms, M1 is 1.5; otherwise, M1 is 1.

Note 5: The inactive-state paging DRX cycle is determined according to a criterion 6. For the criterion 6, refer to TS 38.304.

It should be understood that, in this embodiment of this application, measurement behavior of UE in an inactive state within two PTWs is defined. To be specific, the UE in the inactive state may perform RRM measurement within a first PTW of an idle-state eDRX cycle and/or a second PTW of an inactive-state eDRX cycle. This manner of performing measurement within a PTW and skipping measurement out of a PTW facilitates energy saving for the terminal device.

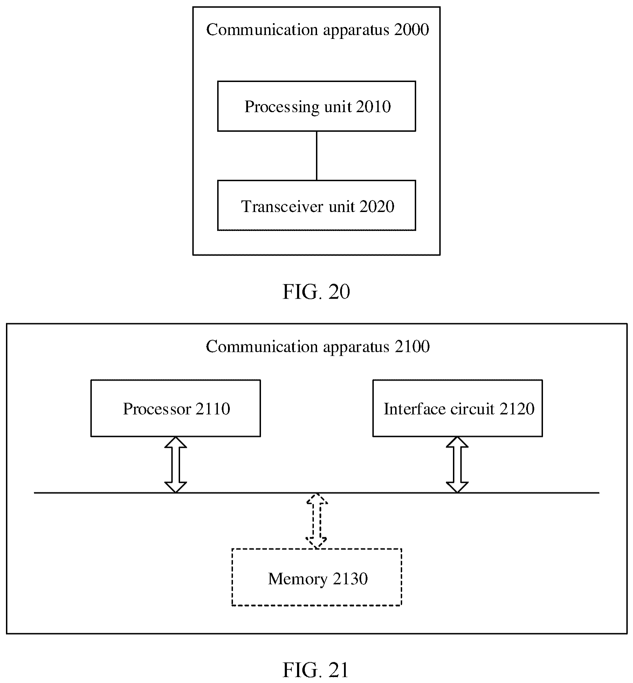

A communication apparatus provided in this application is described below in detail with reference to FIG. 20 and FIG. 21.

It can be understood that, to implement the functions in the foregoing embodiments, a terminal device includes corresponding hardware structures and/or software modules for performing the functions. Persons skilled in the art should be easily aware that, in this application, the units and the method steps in the examples described with reference to embodiments disclosed in this application can be implemented by hardware or a combination of hardware and computer software. Whether a function is performed by hardware or hardware driven by computer software depends on particular application scenarios and design constraints of the technical solutions.

FIG. 20 and FIG. 21 are diagrams of possible structures of communication apparatuses according to embodiments of this application. The communication apparatuses may be configured to implement the functions of the terminal device in the foregoing method embodiments, and therefore can also achieve the beneficial effects in the foregoing method embodiments. In embodiments of this application, the communication apparatus may be one of the terminal devices 120a to 120j shown in FIG. 1, or may be a module (for example, a chip) used in a terminal device.

As shown in FIG. 20, a communication apparatus 2000 includes a processing unit 2010 and a transceiver unit 2020. The communication apparatus 2000 is configured to implement the functions of the terminal device in the method embodiment shown in FIG. 6. Specifically, when the communication apparatus 2000 is configured to implement the functions of the terminal in the method embodiment shown in FIG. 6:

The transceiver unit 2020 is configured to receive a reference signal.

The processing unit 2010 is configured to: in an inactive state, perform radio resource management RRM measurement within a first paging time window PTW of an idle-state extended discontinuous reception eDRX cycle and/or a second PTW of an inactive-state eDRX cycle based on the reference signal, where the inactive-state eDRX cycle is greater than 10.24s.

In a possible implementation, the RRM measurement is performed based on a first parameter set, and the first parameter set includes a length of the idle-state eDRX cycle, a length of the inactive-state eDRX cycle, and a first paging DRX cycle.

In a possible implementation, the first parameter set further includes at least one of the following information: a length of the first PTW and a length of the second PTW.

In a possible implementation, the RRM measurement is performed based on a second parameter set, and the second parameter set includes a length of a first eDRX cycle and a second paging DRX cycle.

In a possible implementation, the second parameter set further includes the following information: a length of a PTW corresponding to the first eDRX cycle.

In a possible implementation, the first eDRX cycle is a larger one between the idle-state eDRX cycle and the inactive-state eDRX cycle, or the first eDRX cycle is a smaller one between the idle-state eDRX cycle and the inactive-state eDRX cycle, or the first eDRX cycle is the inactive-state eDRX cycle.

In a possible implementation, when RRM measurement is performed on a serving cell, that the RRM measurement is performed based on the first parameter set includes:

The RRM measurement is performed based on a quantity R1 of paging DRX cycles, where the quantity R1 of paging DRX cycles is determined based on the first parameter set, and within the first PTW and the second PTW, every R1 paging DRX cycles correspond to one RRM measurement result.

In a possible implementation, when RRM measurement is performed on a serving cell, that the RRM measurement is performed based on the second parameter set includes:

The RRM measurement is performed based on a quantity R2 of paging DRX cycles, where the quantity R2 of paging DRX cycles is determined based on the second parameter set, and within the PTW corresponding to the first eDRX cycle, every R2 paging DRX cycles correspond to one RRM measurement result.

In a possible implementation, when intra-frequency or inter-frequency RRM measurement is performed, that the RRM measurement is performed based on the second parameter set includes:

The RRM measurement is performed based on first duration, where the first duration is determined based on the second parameter set, and within the PTW corresponding to the first eDRX cycle, every first duration corresponds to one RRM measurement result.

In a possible implementation, the first paging DRX cycle or the second paging DRX cycle includes a paging DRX cycle T1 corresponding to a first PTW and a second PTW that do not overlap, and a paging DRX cycle T2 corresponding to a first PTW and a second PTW that overlap; or the first paging DRX cycle or the second paging DRX cycle includes one of T1 and T2.

In a possible implementation, that the first paging DRX cycle or the second paging DRX cycle includes one of T1 and T2 includes:

The first paging DRX cycle or the second paging DRX cycle includes a smaller paging DRX cycle between T1 and T2; or

the first paging DRX cycle or the second paging DRX cycle includes a larger paging DRX cycle between T1 and T2.

In a possible implementation, the paging DRX cycle T1 corresponding to the first PTW and the second PTW that do not overlap includes an idle-state paging DRX cycle or an inactive-state paging DRX cycle.

In a possible implementation, that the paging DRX cycle T2 corresponding to the first PTW and the second PTW that overlap includes:

a paging DRX cycle T2-1 corresponding to an overlapping part of the first PTW and the second PTW that overlap, and a paging DRX cycle T2-2 corresponding to a non-overlapping part of the first PTW and the second PTW that overlap.

In a possible implementation, there is at least one pair of a first PTW and a second PTW that overlap.

In a possible implementation, the first paging DRX cycle includes an idle-state paging DRX cycle and an inactive-state paging DRX cycle.

In a possible implementation, the second paging DRX cycle is a paging DRX cycle corresponding to the first eDRX cycle.

In a possible implementation, any first PTW does not overlap any second PTW.

For more detailed descriptions of the processing unit 2010 and the transceiver unit 2020, refer to related descriptions in the method embodiment shown in FIG. 6.

As shown in FIG. 21, a communication apparatus 2100 includes a processor 2110 and an interface circuit 2120. The processor 2110 and the interface circuit 2120 are coupled to each other. It can be understood that the interface circuit 2120 may be a transceiver or an input/output interface. Optionally, the communication apparatus 2100 may further include a memory 2130, configured to store instructions to be executed by the processor 2110, or store input data needed for running instructions by the processor 2110, or store data generated after the processor 2110 runs instructions.

When the communication apparatus 2100 is configured to implement the method shown in FIG. 6, the processor 2110 is configured to implement the functions of the processing unit 2010, and the interface circuit 2120 is configured to implement the functions of the transceiver unit 2020.

For example, the transceiver unit 2020 is configured to receive a reference signal; and

the processor 2110 is configured to: in an inactive state, perform radio resource management RRM measurement within a first paging time window PTW of an idle-state extended discontinuous reception eDRX cycle and/or a second PTW of an inactive-state eDRX cycle based on the reference signal, where the inactive-state eDRX cycle is greater than 10.24s.

In a possible implementation, the RRM measurement is performed based on a first parameter set, and the first parameter set includes a length of the idle-state eDRX cycle, a length of the inactive-state eDRX cycle, and a first paging DRX cycle.

In a possible implementation, the first parameter set further includes at least one of the following information: a length of the first PTW and a length of the second PTW.

In a possible implementation, the RRM measurement is performed based on a second parameter set, and the second parameter set includes a length of a first eDRX cycle and a second paging DRX cycle.

In a possible implementation, the second parameter set further includes the following information: a length of a PTW corresponding to the first eDRX cycle.

In a possible implementation, the first eDRX cycle is a larger one between the idle-state eDRX cycle and the inactive-state eDRX cycle, or the first eDRX cycle is a smaller one between the idle-state eDRX cycle and the inactive-state eDRX cycle, or the first eDRX cycle is the inactive-state eDRX cycle.

In a possible implementation, when RRM measurement is performed on a serving cell, that the RRM measurement is performed based on the first parameter set includes:

The RRM measurement is performed based on a quantity R1 of paging DRX cycles, where the quantity R1 of paging DRX cycles is determined based on the first parameter set, and within the first PTW and the second PTW, every R1 paging DRX cycles correspond to one RRM measurement result.

In a possible implementation, when RRM measurement is performed on a serving cell, that the RRM measurement is performed based on the second parameter set includes:

The RRM measurement is performed based on a quantity R2 of paging DRX cycles, where the quantity R2 of paging DRX cycles is determined based on the second parameter set, and within the PTW corresponding to the first eDRX cycle, every R2 paging DRX cycles correspond to one RRM measurement result.

In a possible implementation, when intra-frequency or inter-frequency RRM measurement is performed, that the RRM measurement is performed based on the second parameter set includes:

The RRM measurement is performed based on first duration, where the first duration is determined based on the second parameter set, and within the PTW corresponding to the first eDRX cycle, every first duration corresponds to one RRM measurement result.

In a possible implementation, the first paging DRX cycle or the second paging DRX cycle includes a paging DRX cycle T1 corresponding to a first PTW and a second PTW that do not overlap, and a paging DRX cycle T2 corresponding to a first PTW and a second PTW that overlap; or

the first paging DRX cycle or the second paging DRX cycle includes one of T1 and T2.

In a possible implementation, that the first paging DRX cycle or the second paging DRX cycle includes one of T1 and T2 includes:

The first paging DRX cycle or the second paging DRX cycle includes a smaller paging DRX cycle between T1 and T2; or

the first paging DRX cycle or the second paging DRX cycle includes a larger paging DRX cycle between T1 and T2.

In a possible implementation, the paging DRX cycle T1 corresponding to the first PTW and the second PTW that do not overlap includes an idle-state paging DRX cycle or an inactive-state paging DRX cycle.

In a possible implementation, that the paging DRX cycle T2 corresponding to the first PTW and the second PTW that overlap includes:

a paging DRX cycle T2-1 corresponding to an overlapping part of the first PTW and the second PTW that overlap, and a paging DRX cycle T2-2 corresponding to a non-overlapping part of the first PTW and the second PTW that overlap.

In a possible implementation, there is at least one pair of a first PTW and a second PTW that overlap.

In a possible implementation, the first paging DRX cycle includes an idle-state paging DRX cycle and an inactive-state paging DRX cycle.

In a possible implementation, the second paging DRX cycle is a paging DRX cycle corresponding to the first eDRX cycle.

In a possible implementation, any first PTW does not overlap any second PTW.

When the communication apparatus is a chip used in a terminal, the chip in the terminal implements the functions of the terminal in the foregoing method embodiments. The chip in the terminal receives, through another module (for example, a radio frequency module or an antenna) in the terminal, information sent by a base station to the terminal. Alternatively, the chip in the terminal sends information to another module (for example, a radio frequency module or an antenna) in the terminal, where the information is sent by the terminal to a base station.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any conventional processor.

The method steps in embodiments of this application may be implemented in hardware, or may be implemented in software instructions that can be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be located in an ASIC. In addition, the ASIC may be located in a base station or a terminal. The processor and the storage medium may alternatively exist in a base station or a terminal as discrete components.

All or some of the foregoing embodiments may be implemented by software, hardware, firmware, or any combination thereof. When the embodiments are implemented by software, all or some of the embodiments may be implemented in a form of a computer program product. The computer program product includes one or more computer programs or instructions. When the computer programs or instructions are loaded and executed on a computer, all or some of the processes or the functions in embodiments of this application are performed. The computer may be a general-purpose computer, a dedicated computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium accessible to a computer, or a data storage device, for example, a server or a data center, integrating one or more usable media. The usable medium may be a magnetic medium, for example, a floppy disk, a hard disk drive, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise specified or a logic conflict occurs, terms and/or descriptions in different embodiments are consistent and may be mutually referenced, and technical features in different embodiments may be combined into a new embodiment based on an internal logical relationship between the technical features.

It can be understood that various numbers in embodiments of this application are merely intended for differentiation for ease of description, but not to limit the scope of embodiments of this application. Sequence numbers of the foregoing processes do not mean an execution sequence. The execution sequence of the processes should be determined based on functions and internal logic of the processes.

**Claims**

1. A measurement method, wherein the method comprises:

   receiving a reference signal; and
   in an inactive state, performing radio resource management RRM measurement within a first paging time window PTW of an idle-state extended discontinuous reception eDRX cycle and/or a second PTW of an inactive-state eDRX cycle based on the reference signal, wherein the inactive-state eDRX cycle is greater than 10.24s.

2. The method according to claim 1, wherein the RRM measurement is performed based on a first parameter set, and the first parameter set comprises a length of the idle-state eDRX cycle, a length of the inactive-state eDRX cycle, and a first paging DRX cycle.

3. The method according to claim 2, wherein the first parameter set further comprises at least one of the following information:
   a length of the first PTW and a length of the second PTW.

4. The method according to claim 1, wherein the RRM measurement is performed based on a second parameter set, and the second parameter set comprises a length of a first eDRX cycle and a second paging DRX cycle.

5. The method according to claim 4, wherein the second parameter set further comprises the following information:
   a length of a PTW corresponding to the first eDRX cycle.

6. The method according to claim 4 or 5, wherein the first eDRX cycle is a larger one between the idle-state eDRX cycle and the inactive-state eDRX cycle, or the first eDRX cycle is a smaller one between the idle-state eDRX cycle and the inactive-state eDRX cycle, or the first eDRX cycle is the inactive-state eDRX cycle.

7. The method according to claim 2 or 3, wherein when RRM measurement is performed on a serving cell,
   that the RRM measurement is performed based on the first parameter set comprises:
   the RRM measurement is performed based on a quantity R1 of paging DRX cycles, wherein the quantity R1 of paging DRX cycles is determined based on the first parameter set, and within the first PTW and the second PTW, every R1 paging DRX cycles correspond to one RRM measurement result.

8. The method according to any one of claims 4 to 6, wherein when RRM measurement is performed on a serving cell,
   that the RRM measurement is performed based on the second parameter set comprises:
   the RRM measurement is performed based on a quantity R2 of paging DRX cycles, wherein the quantity R2 of paging DRX cycles is determined based on the second parameter set, and within the PTW corresponding to the first eDRX cycle, every R2 paging DRX cycles correspond to one RRM measurement result.

9. The method according to any one of claims 4 to 6, wherein when intra-frequency or inter-frequency RRM measurement is performed,
   that the RRM measurement is performed based on the second parameter set comprises:
   the RRM measurement is performed based on first duration, wherein the first duration is determined based on the second parameter set, and within the PTW corresponding to the first eDRX cycle, every first duration corresponds to one RRM measurement result.

10. The method according to any one of claims 2 to 9, wherein the first paging DRX cycle or the second paging DRX cycle comprises a paging DRX cycle T1 corresponding to the first PTW and the second PTW that do not overlap, and a paging DRX cycle T2 corresponding to the first PTW and the second PTW that overlap; or
    the first paging DRX cycle or the second paging DRX cycle comprises one of T1 and T2.

**EP 4 661 512 A1**

11. The method according to claim 10, wherein that the first paging DRX cycle or the second paging DRX cycle comprises one of T1 and T2 comprises:
the first paging DRX cycle or the second paging DRX cycle comprises a smaller paging DRX cycle between Tl and T2; or
the first paging DRX cycle or the second paging DRX cycle comprises a larger paging DRX cycle between T1 and T2.

12. The method according to claim 10 or 11, wherein the paging DRX cycle T1 corresponding to the first PTW and the second PTW that do not overlap comprises the idle-state paging DRX cycle or the inactive-state paging DRX cycle.

13. The method according to any one of claims 10 to 12, wherein the paging DRX cycle T2 corresponding to the first PTW and the second PTW that overlap comprises:
a paging DRX cycle T2-1 corresponding to an overlapping part of the first PTW and the second PTW that overlap, and
a paging DRX cycle T2-2 corresponding to a non-overlapping part of the first PTW and the second PTW that overlap.

14. The method according to any one of claims 10 to 13, wherein there is at least one pair of the first PTW and the second PTW that overlap.

15. The method according to claim 2, 3, or 7, wherein
the first paging DRX cycle comprises an idle-state paging DRX cycle and an inactive-state paging DRX cycle.

16. The method according to any one of claims 4 to 6 or claim 8 or 9, wherein
the second paging DRX cycle is a paging DRX cycle corresponding to the first eDRX cycle.

17. The method according to claim 15 or 16, wherein any first PTW does not overlap any second PTW.

18. A communication apparatus, comprising a unit or a module for performing the method according to any one of claims 1 to 17.

19. A communication apparatus, comprising a processor and an interface circuit, wherein the interface circuit is configured to receive a signal from a communication apparatus other than the communication apparatus and transmit the signal to the processor, or send a signal that comes from the processor to a communication apparatus other than the communication apparatus, and the processor is configured to implement the method according to any one of claims 1 to 17 through a logic circuit or by executing code instructions.

20. A computer-readable storage medium, wherein the storage medium stores a computer program or instructions, and when the computer program or instructions is/are executed by a communication apparatus, the method according to any one of claims 1 to 17 is implemented.

21. A computer program product, comprising computer program code, wherein when the computer program code is run on a computer, the method according to any one of claims 1 to 17 is implemented.

FIG. 1

On duration
(on duration)

Opportunity for DRX
(opportunity for DRX)

One paging DRX cycle

## FIG. 2

Inactive-state eDRX cycle

Second PTW

T1: inactive-state
paging DRX cycle

First PTW

T1: idle-state paging
DRX cycle

Idle-state eDRX cycle

## FIG. 3

Inactive-state eDRX cycle

Second PTW

First PTW

Idle-state eDRX cycle

## FIG. 4

| Second PTW |  |
|---|---|
| First PTW | |

T2

(a)

| Second PTW |  |
|---|---|
| First PTW | |

T2-1          T2-2

(b)

FIG. 5

| Radio access network device | | Terminal device |
|---|---|---|

S601: Send a reference signal →

S602: In an inactive state, perform RRM measurement within a first PTW of an idle-state eDRX cycle and/or a second PTW of an inactive-state eDRX cycle based on the reference signal

FIG. 6

(a)

(b)

FIG. 7

FIG. 8

EP 4 661 512 A1

EP 4 661 512 A1

Sampling point

T1

T2

Idle-state eDRX cycle
Idle-state eDRX cycle
Idle-state eDRX cycle

Inactive-state eDRX cycle
Inactive-state eDRX cycle
Inactive-state eDRX cycle
Inactive-state eDRX cycle
Inactive-state eDRX cycle

First PTW

1 2

7 8

13 14

Second PTW

3 4 5 6

9 10 11 12

**Perform measurement based on T2**

**Perform measurement based on T1**

**Perform measurement based on T2**

**Perform measurement based on T1**

**Perform measurement based on T2**

FIG. 9

○◆□ Sampling point          T1          T2-1          T2-2
                            ◇—◇        ○——○            ◾◾

|◄———— Idle-state eDRX cycle ————►|◄———— Idle-state eDRX cycle ————►|◄———— Idle-state eDRX cycle ————►|

|◄— Inactive-state eDRX cycle —►|◄— Inactive-state eDRX cycle —►|◄— Inactive-state eDRX cycle —►|◄— Inactive-state eDRX cycle —►|◄— Inactive-state eDRX cycle —►|

First PTW

Second PTW

1   2   3 4              9   10   11 12              17  18  19 20

5  6  7  8                    13  14  15  16

Perform measurement based on T2-1/T-2

Perform measurement based on T1

Perform measurement based on T2-1/T-2

Perform measurement based on T1

Perform measurement based on T2-1/T-2

FIG. 10

FIG. 11

EP 4 661 512 A1

FIG. 12

Sampling ○
point

T2
○————●

Idle-state eDRX cycle ⟶⟵ Idle-state eDRX cycle ⟶⟵ Idle-state eDRX cycle

Inactive-state eDRX cycle ⟶⟵ Inactive-state eDRX cycle ⟶⟵ Inactive-state eDRX cycle ⟶⟵ Inactive-state eDRX cycle ⟶⟵ **Inactive-state eDRX cycle**

First PTW

1  2

3  4

5  6

Second PTW

**Perform measurement based on T2**

**Perform measurement based on T2**

**Perform measurement based on T2**

(a)

Sampling ○ ◻
point

T2-1
○————●

T2-2
◻●◻

Idle-state eDRX cycle ⟶⟵ Idle-state eDRX cycle ⟶⟵ Idle-state eDRX cycle

**Inactive-state eDRX cycle** ⟶⟵ **Inactive-state eDRX cycle** ⟶⟵ Inactive-state eDRX cycle ⟶⟵ Inactive-state eDRX cycle ⟶⟵ Inactive-state eDRX cycle

First PTW

1  2  3 4

5  6  7  8

9  10  11 12

Second PTW

**Perform measurement based on T2-1/T-2**

**Perform measurement based on T2-1/T-2**

**Perform measurement based on T2-1/T-2**

(b)

FIG. 13

FIG. 14

FIG. 15

○ ◆ Sampling point

FIG. 16

FIG. 17

EP 4 661 512 A1

○ Sampling point

Perform measurement based on the idle-state paging DRX cycle within the first PTW

○━━○ Idle-state paging DRX cycle

FIG. 18

◇    Sampling point

Perform measurement based on the inactive-state paging DRX cycle within the second PTW

◇–◇    Inactive-state paging DRX cycle

FIG. 19

Communication apparatus 2000

Processing unit 2010

Transceiver unit 2020

FIG. 20

Communication apparatus 2100

Processor 2110

Interface circuit 2120

Memory 2130

FIG. 21

## INTERNATIONAL SEARCH REPORT

| International application No. |
| --- |
| **PCT/CN2024/075595** |

**A.    CLASSIFICATION OF SUBJECT MATTER**

H04W52/02(2009.01)i

According to International Patent Classification (IPC) or to both national classification and IPC

**B.    FIELDS SEARCHED**

Minimum documentation searched (classification system followed by classification symbols)

IPC：H04W

Documentation searched other than minimum documentation to the extent that such documents are included in the fields searched

Electronic data base consulted during the international search (name of data base and, where practicable, search terms used)

CNTXT, ENTXT, DWPI, CNKI, 3GPP: 非激活, 空闲, 寻呼时间窗, 扩展非连续, 增强非连续, 测量, 参考信号, 周期, 大于, 10.24, eDRX, inactive, idle, PTW, RRM, measurement, longer

**C.    DOCUMENTS CONSIDERED TO BE RELEVANT**

| Category* | Citation of document, with indication, where appropriate, of the relevant passages | Relevant to claim No. |
| --- | --- | --- |
| X | WO 2023272697 A1 (BEIJING XIAOMI MOBILE SOFTWARE CO., LTD.) 05 January 2023 (2023-01-05) description, page 5, line 1-page 11, line 16, and page 41, line 11-page 42, line 23 | 1, 4-6, 8, 9, 16-21 |
| X | WO 2023272698 A1 (BEIJING XIAOMI MOBILE SOFTWARE CO., LTD.) 05 January 2023 (2023-01-05) description, page 4, line 33-page 11, line 29, and page 16, line 15-page 17, line 27 | 1, 4-6, 8, 9, 16-21 |
| A | CN 115604866 A (VIVO COMMUNICATION TECHNOLOGY CO., LTD.) 13 January 2023 (2023-01-13) entire document | 1-21 |
| A | WO 2022207777 A1 (TELEFONAKTIEBOLAGET LM ERICSSON (PUBL)) 06 October 2022 (2022-10-06) entire document | 1-21 |
| A | OPPO. "Extended DRX enhancements for Redcap UE" *3GPP TSG-RAN WG4 Meeting #101-bis-e, R4-2201147*, 25 January 2022 (2022-01-25), sections 1-2 | 1-21 |

☐ Further documents are listed in the continuation of Box C.    ☑ See patent family annex.

| | |
| --- | --- |
| *    Special categories of cited documents: | "T"    later document published after the international filing date or priority date and not in conflict with the application but cited to understand the principle or theory underlying the invention |
| "A"    document defining the general state of the art which is not considered to be of particular relevance | |
| "D"    document cited by the applicant in the international application | "X"    document of particular relevance; the claimed invention cannot be considered novel or cannot be considered to involve an inventive step when the document is taken alone |
| "E"    earlier application or patent but published on or after the international filing date | |
| "L"    document which may throw doubts on priority claim(s) or which is cited to establish the publication date of another citation or other special reason (as specified) | "Y"    document of particular relevance; the claimed invention cannot be considered to involve an inventive step when the document is combined with one or more other such documents, such combination being obvious to a person skilled in the art |
| "O"    document referring to an oral disclosure, use, exhibition or other means | "&"    document member of the same patent family |
| "P"    document published prior to the international filing date but later than the priority date claimed | |

| Date of the actual completion of the international search | Date of mailing of the international search report |
| --- | --- |
| **18 April 2024** | **24 April 2024** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

EP 4 661 512 A1

## INTERNATIONAL SEARCH REPORT
### Information on patent family members

International application No.

**PCT/CN2024/075595**

| Patent document cited in search report | | | Publication date (day/month/year) | Patent family member(s) | | | Publication date (day/month/year) |
|---|---|---|---|---|---|---|---|
| WO | 2023272697 | A1 | 05 January 2023 | CN | 115735386 | A | 03 March 2023 |
| WO | 2023272698 | A1 | 05 January 2023 | CN | 115735377 | A | 03 March 2023 |
| CN | 115604866 | A | 13 January 2023 | WO | 2023280070 | A1 | 12 January 2023 |
| WO | 2022207777 | A1 | 06 October 2022 | BR | 112023019767 | A2 | 31 October 2023 |
| | | | | EP | 4316018 | A1 | 07 February 2024 |
| | | | | IN | 202317065287 | A | 15 December 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310165197